# EUROPEAN PATENT SPECIFICATION

(11) **EP 3 908 451 B1**
(45) Date of publication and mention of the grant of the patent: **29.11.2023**
(21) Application number: 19927203.0
(22) Date of filing: 29.04.2019
(51) Int. Cl.: B29C 64/153, B33Y 10/00, B33Y 30/00, B33Y 70/00, C08K 5/25, C08K 5/43, C08K 5/5399, C08L 77/00, C08L 77/02, B29C 64/165, C08K 5/24

(54) **THREE-DIMENSIONAL PRINTING**
DREIDIMENSIONALES DRUCKEN
IMPRESSION EN TROIS DIMENSIONS

(43) Date of publication of application: 17.11.2021
(73) Proprietor: Hewlett-Packard Development Company, L.P., Spring TX 77389 (US)
(72) Inventor: DISCEKICI, Emre Hiro, San Diego, California 92127-1899 (US); WOODRUFF, Shannon Reuben, San Diego, California 92127-1899 (US); FLEISCHMANN, Carolin, San Diego, California 92127-1899 (US)
(74) Representative: HGF
(86) International application number: PCT/US2019/029672
(87) International publication number: WO 2020/222747

(56) References cited:
- DE-A1- 2 622 496
- JP-A- 2018 158 571
- US-A1- 2011 293 868
- US-A1- 2019 054 688
- US-B2- 10 030 154

## Description

### BACKGROUND

Three-dimensional (3D) printing may be an additive printing process used to make three-dimensional solid parts from a digital model. 3D printing is often used in rapid product prototyping, mold generation, mold master generation, and short run manufacturing. Some 3D printing techniques are considered additive processes because they involve the application of successive layers of material (which, in some examples, may include build material, binder and/or other printing liquid(s), or combinations thereof). This is unlike traditional machining processes, which often rely upon the removal of material to create the final part. Some 3D printing methods use chemical binders or adhesives to bind build materials together. Other 3D printing methods involve at least partial curing, thermal merging/fusing, melting, sintering, etc. of the build material, and the mechanism for material coalescence may depend upon the type of build material used. For some materials, at least partial melting may be accomplished using heat-assisted extrusion, and for some other materials (e.g., polymerizable materials), curing or fusing may be accomplished using, for example, ultra-violet light or infrared light. US 2019/0054688 A1 discloses material set (kit), comprising: a powder bed material, including a polyamide-12 powder having an average particle size from 20 µm to 120 µm, wherein the polyamide-12 powder has a solution viscosity from 1.85 to 2.0 at room temperature, and wherein the polyamide-12 powder includes greater than 80 meq/g carboxylic end groups and less than 40 meq/g amino end groups; and a fusing agent comprising an energy absorber capable of absorbing electromagnetic radiation to product heat.

### BRIEF DESCRIPTION OF THE DRAWINGS

Features of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.
Fig. 1 is a flow diagram illustrating an example of a method for 3D printing;
Fig. 2 is a graphic illustration of one example of the method for 3D printing;
Fig. 3A is a black and white version of an originally colored photograph of a comparative build material composition after an aging process;
Figs. 3B, 3C, 3D and 3E are black and white versions of originally colored photographs of different example build material compositions after an aging process;
Fig. 4A is a graph depicting the b* values of the comparative example build material of Fig. 3A and the example build material compositions of Fig. 3B through Fig. 3E after the aging process;
Fig. 4B is a graph depicting the L* values of the comparative example build material of Fig. 3A and the example build material compositions of Fig. 3B through Fig. 3E after the aging process; and
Figs. 5A through 5D are black and white versions of originally colored photographs of a comparative 3D object (formed with a comparative build material composition) before (5A) and after an aging process (5B), and an example 3D object (formed with an example build material composition) before (5C) and after an aging process (5D).

### DETAILED DESCRIPTION

Some examples of three-dimensional (3D) printing may utilize a fusing agent (including an energy absorber) to pattern polymeric build material. In these examples, an entire layer of the polymeric build material is exposed to radiation, but the patterned region (which, in some instances, is less than the entire layer) of the polymeric build material is coalesced/fused and hardened to become a layer of a 3D object. In the patterned region, the fusing agent is capable of at least partially penetrating into voids between the polymeric build material particles, and is also capable of spreading onto the exterior surface of the polymeric build material particles. This fusing agent is capable of absorbing radiation and converting the absorbed radiation to thermal energy, which in turn coalesces/fuses the polymeric build material that is in contact with the fusing agent. Coalescing/fusing causes the polymeric build material to join or blend to form a single entity (i.e., the layer of the 3D object). Coalescing/fusing may involve at least partial thermal merging, melting, binding, and/or some other mechanism that coalesces the polymeric build material to form the layer of the 3D object.

In these examples of 3D printing, the entire layer of the polymeric build material may be pre-heated (e.g., to a temperature ranging from about 5°C to about 50°C below the melting point of the polymeric build material). Pre-heating the polymeric build material reduces the amount of thermal energy that is sufficient to elevate the polymeric build material above its melting point (as compared to the amount of thermal energy that is sufficient to elevate the polymeric build material that is not pre-heated above its melting point). In other words, pre-heating reduces the amount of radiation (absorbed and converted to thermal energy by the fusing agent) that is sufficient to coalesce/fuse the polymeric build material. As such, pre-heating the polymeric build material may reduce the energy and time involved in the 3D printing process, which may reduce the cost of the process.

Non-patterned and non-fused polymeric build material in layers that have been exposed to the full printing cycle (i.e., patterning and fusing) may be maintained at the pre-heating temperature throughout the 3D printing process due in part, to the pre-heating of subsequently applied build material layers, the exposure to radiation, and/or the transfer of thermal energy from the fused build material. In some instances, the non-patterned (and therefore, non-fused) build material may be maintained at the pre-heating temperature for several hours, and thus this build material may be exposed to high temperatures for a prolonged period. Moreover, the high temperature exposure may take place in an air environment (i.e., an environment containing 20 vol% or more oxygen) or another oxygen-containing environment.

Prolonged exposure to high temperatures in an oxygen-containing environment may result in the thermal degradation of the polymeric build material. For example, exposure to high temperatures in an oxygen-containing environment may result in chain scission at the amide functionality of a polyamide build material. Thermal degradation may cause discoloration of the polymeric build material and/or may reduce the reusability/recyclability of the polymeric build material.

The discoloration of the polymeric build material may be measured in terms of the change in the L* (i.e., lightness) value and/or in terms of the change in the b* (i.e., blue-yellow) value of the polymeric build material before being exposed to heating and after being exposed to heating. The change in the L* value and the change in b* value each corresponds to the amount of discoloration. For example, a larger change in the L* value or in the b* value denotes a larger amount of discoloration (i.e., a more pronounced change in color), and an unchanged L* value or b* value denotes no discoloration. As another example, an increase in the b* value denotes yellowing of the polymeric build material. While the discoloration of the polymeric build material may be due, in large part, to thermal degradation, some antioxidants (when included in the polymeric build material) may contribute to the discoloration. For example, some phenolic antioxidants may turn yellow after reacting with radicals. L* and b* are measured in the CIELAB color space, and may be measured using any suitable color measurement instrument (such as those available from HunterLab).

The reusability/recyclability of the used polymeric build material (i.e., build material exposed to an aging process or one or more 3D print cycles) may be measured in terms of the decrease in relative solution viscosity as compared to the initial relative solution viscosity (i.e., of the fresh build material). A large decrease in the relative solution viscosity (e.g., a decrease of 25% or more) may denote i) poor reusability of the build material (i.e., the mechanical properties of a part built from this reused build material may be deleteriously affected), or ii) that more fresh build material may have to be mixed in with the used polymeric build material in order to compensate for its poor reusability. Further, a substantially unchanged or slightly decreased relative solution viscosity (e.g., a decrease of 10% or less) may denote good reusability. It is believed that an increase in the relative solution viscosity may not affect the reusability/recyclability of the polymeric build material.

Relative solution viscosity (or "solution viscosity" or "relative viscosity" for brevity) is determined by combining 0.5 wt% of the polymeric build material with 99.5 wt% of m-cresol (also known as 3-methylphenol) and measuring the viscosity of the mixture at room temperature (e.g., 20°C) compared to the viscosity of pure m-cresol. The viscosity measurements are based on the time it takes for a certain volume of the mixture or liquid to pass through a capillary viscometer under its own weight or gravity. The solution viscosity is defined as a ratio of the time it takes the mixture (including the polymeric build material) to pass through the capillary viscometer to the time it takes the pure liquid takes to pass through the capillary viscometer. As the mixture is more viscous than the pure liquid and a higher viscosity increases the time it takes to pass through the capillary viscometer, the solution viscosity is greater than 1. As an example, the mixture of 0.5 wt% of the polymeric build material in 99.5 wt% of the m-cresol may take about 180 seconds to pass through the capillary viscometer, and m-cresol may take about 120 seconds to pass through the capillary viscometer. In this example, the solution viscosity is 1.5 (i.e., 180 seconds divided by 120 seconds). Further details for determining solution viscosity under this measurement protocol are described in International Standard ISO 307, Fifth Edition, 2007-05-15, incorporated herein by reference in its entirety.

To facilitate the measurement of the change in the L* value, the change in the b* value, and/or the measurement of the change in solution viscosity, the polymeric build material may be subjected to an aging process for a predetermined amount of time at a specific temperature profile. For example, the aging process may include exposing the polymeric build material to an air environment that has a temperature of about 175°C for about 20 hours. The environment used during the aging process may be similar to or slightly harsher than the environment to which the polymeric build material may be exposed during 3D printing. As other examples, a temperature of 165°C, or a temperature of 180°C, or a temperature of 190°C, or another temperature may be used, as long as the temperature used is below the melting temperature of the polymeric build material used). The temperature used during the aging process may be similar to the temperature(s) to which the non-patterned polymeric build material may be exposed during 3D printing. As yet other examples, a time period of 10 hours, or a time period 40 hours, or a time period of 72 hours, or another time period may be used. The time period of the aging process may be similar to the time period of the 3D printing process (or multiple 3D printing processes in which reused/recycled polymeric build material may be used), or may be extended to compensate for a printing process temperature that is higher than the aging temperature.

The conditions associated with the aging process may, without melting the polymeric build material, facilitate the change in the L* value, the change in the b* value, and/or the change in relative solution viscosity that the polymeric build material may have exhibited as a result of being exposed to the 3D printing process that utilizes the fusing agent. It is to be understood that the change that the polymeric build material would have exhibited during 3D printing may be less than the change the aging process facilitates depending, in part, on the environment, the temperature, and the time period of the 3D printing process.

The change in the L* value may be determined by measuring the L* value of the polymeric build material before and after the aging process, and subtracting the "before" L* value from the "after" L* value. The L* value of the polymeric build material may be greater before the aging process than after the aging process due, in part, to the darkening of the light color of the polymeric build material.

The change in the b* value may be determined by measuring the b* value of the polymeric build material before and after the aging process, and subtracting the "before" b* value from the "after" b* value. The b* value of the polymeric build material may be greater after the aging process than before the aging process due, in part, to the yellowing of the polymeric build material.

The change in solution viscosity may be determined by measuring the solution viscosity of the polymeric build material before and after the aging process, and subtracting the "before" solution viscosity from the "after" solution viscosity. In some examples, the solution viscosity of the polymeric build material is greater after the aging process than before the aging process due, in part, to polymerization through reactive end groups of the polymeric build material. In other examples, the solution viscosity of the polymeric build material is greater before the aging process than after the aging process due, in part, to thermal degradation (through oxidation) of the polymeric build material.

### Build Material Compositions

Disclosed herein is a build material composition that includes a polyamide material and an antioxidant. The antioxidant reduces the thermal degradation (and therefore, improves the stability) of the polyamide material when it is exposed to high temperatures (as compared to the thermal degradation of polyamide material, when exposed to high temperatures without the antioxidant). As such, the antioxidant may reduce the discoloration of the polyamide material and/or improve the reusability/recyclability of the polyamide material.

Additionally, it has been unexpectedly discovered that the antioxidant disclosed herein may be used without any other, or instead of another, antioxidant. The antioxidant disclosed herein scavenges (i.e., directly consumes) molecular oxygen. By reducing the oxygen surrounding the polymeric material, the effects of oxidative degradation can be mitigated. The direct consumption of oxygen may be more effective at reducing polymer degradation than other antioxidant mechanisms, such as quenching reactive free radicals or reacting with intermediate degradation products of the polymer radicals and molecular oxygen. As such, the antioxidant disclosed herein may be the sole stabilization additive in the build material composition. In other words, in some examples, the build material composition may not include any antioxidant other than the hydrazide examples disclosed herein.

In other examples, the build material composition includes substantially no antioxidants or polymer stabilization additives in addition to the hydrazide examples disclosed herein. By "substantially no antioxidants or polymer stabilization additives", it is meant that an additional antioxidant or polymer stabilization additive is present in a trace amount, e.g., in an amount of less than 0.1 weight percent (wt% or wt% active) based on the total weight of the build material composition. The trace amount may be included, e.g., with the polyamide that is used. The hydrazide antioxidant disclosed herein and the byproducts of the antioxidant disclosed herein (e.g., CO₂, N₂, H₂O, etc.) are unlikely to react with other antioxidants and/or their reaction byproducts. Thus, the antioxidant disclosed here may be included in the build material composition with other antioxidants in very little amounts without negatively interacting with the other antioxidants.

In an example, the build material composition for three-dimensional (3D) printing, comprises: a polyamide material; and an antioxidant consisting of: an aromatic multihydrazide; or an aromatic sulfonomonohydrazide; or a hydrazide having: a formula (I): 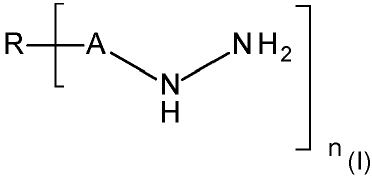 wherein: R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof; A is C=O, O=S=O, P=O, or C=S; and n is an integer ranging from 1 to 4; or a formula (II): 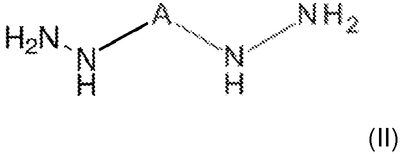 wherein A is C=O, O=S=O, P=O, or C=S.

### Polyamide Materials

The polyamide material may be any polyamide material. In some examples, the polyamide material is selected from the group consisting of polyamide 11 (PA 11 / nylon 11), polyamide 12 (PA 12 I nylon 12), polyamide 6 (PA 6 / nylon 6), polyamide 6-GB (PA 6-GB / nylon 6-GB), polyamide 13 (PA 13 / nylon 13), polyamide 6,13 (PA 6,13 / nylon 6,13), polyamide 8 (PA 8 / nylon 8), polyamide 9 (PA 9 / nylon 9), polyamide 66 (PA 66 / nylon 66), polyamide 612 (PA 612 / nylon 612), polyamide 812 (PA 812 / nylon 812), polyamide 912 (PA 912 / nylon 912), and a combination thereof. In other examples, the polyamide material is selected from the group consisting of polyamide 12, polyamide 11, polyamide 6-GB, polyamide 6,13, polyamide 6, polyamide 13, and combinations thereof. It is to be understood that polyamide 6-GB refers to a polyamide 6 including glass beads or another form of glass disclosed herein (mixed therewith or encapsulated therein, e.g., at a weight ratio of the glass to the polyamide 6 within the ranges set forth herein). Other glass reinforced polyamides may be used, as long as the build material composition includes substantially no antioxidants or polymer stabilization additives in addition to the hydrazide examples disclosed herein.

In some examples, the polyamide material may be in the form of a powder. In other examples, the polyamide material may be in the form of a powder-like material, which includes, for example, short fibers having a length that is greater than its width. In some examples, the powder or powder-like material may be formed from, or may include, short fibers that may, for example, have been cut into short lengths from long strands or threads of material.

The polyamide material may be made up of similarly sized particles and/or differently sized particles. In an example, the average particle size of the polyamide material ranges from about 2 µm to about 200 µm. In another example, the average particle size of the polyamide material ranges from about 10 µm to about 110 µm. In still another example, the average particle size of the polyamide material ranges from about 20 µm to about 100 µm. The term "average particle size", as used herein, may refer to a number-weighted mean diameter or a volume-weighted mean diameter of a particle distribution.

The polyamide material may have a wide processing window of greater than 5°C, which can be defined by the temperature range between the melting point and the re-crystallization temperature. As examples, the polyamide may have a melting point ranging from about 225°C to about 250°C, from about 155°C to about 215°C, about 160°C to about 200°C, from about 170°C to about 190°C, or from about 182°C to about 189°C. As another example, the polyamide material may have a melting point of about 180°C.

In some examples, the polyamide material does not substantially absorb radiation having a wavelength within the range of 400 nm to 1400 nm. In other examples, the polyamide material does not substantially absorb radiation having a wavelength within the range of 800 nm to 1400 nm. In still other examples, the polyamide material does not substantially absorb radiation having a wavelength within the range of 400 nm to 1200 nm. In these examples, the polyamide material may be considered to reflect the wavelengths at which the polyamide material does not substantially absorb radiation. The phrase "does not substantially absorb" means that the absorptivity of the polyamide material at a particular wavelength is 25% or less (e.g., 20%, 10%, 5%, etc.).

In some examples, the polyamide material may also include glass therein (e.g., when the polyamide material is polyamide 6-GB or another glass reinforced polyamide material that contains substantially no antioxidants or polymer stabilization additives in addition to the hydrazide examples disclosed herein). In some of these examples, the glass may be dry blended with the polyamide polymer. In others of these examples, the glass may be encapsulated by the polyamide polymer. When the glass is encapsulated by the polyamide polymer, the polyamide polymer may form a continuous coating (i.e., none of the glass is exposed) or a substantially continuous coating (i.e., 5% or less of the glass is exposed) on the glass.

Whether the glass is dry blended with the polyamide polymer or encapsulated by the polyamide polymer may depend, in part, on (i) the characteristics of the glass, and (ii) the 3D printer with which the build material composition is to be used. As an example, when the glass includes glass fibers and/or crushed glass, the glass may be encapsulated by the polyamide polymer. As another example, when segregation of dry blended polyamide polymer and glass may occur and cause damage to the 3D printer in which the build material composition is to be used, the glass may be encapsulated by the polyamide polymer.

When the glass is dry blended with the polyamide polymer, the average particle size of the glass may range from about 5 µm to about 100 µm.

When the glass is encapsulated by the polyamide polymer, the average particle size of the glass (prior to being coated) may range from about 5 µm to about 100 µm or from about 30 µm to about 50 µm. The average particle size of the encapsulated material (i.e., the glass coated with the polyamide polymer) may depend upon the size of the glass prior to coating and the thickness of the polyamide polymer that is applied to the glass. In an example, the average particle size of the encapsulated build material may range from about 10 µm to about 200 µm. In another example, the average particle size of the encapsulated build material may range from about 20 µm to about 120 µm.

The weight ratio of the glass to the polyamide polymer (e.g., polyamide 6) may range from about 5:95 to about 60:40. In some examples, the weight ratio of the glass to the polyamide polymer may range from about 10:90 to about 60:40; or from about 20:80 to about 60:40; or from about 40:60 to about 60:40; or from about 5:95 to about 40:60; or from about 5:95 to about 50:50. In some instances, additives (e.g., whitener(s), antistatic agent(s), flow aid(s), etc.) may be included with the polyamide polymer and glass. In these instances, the weight of the polyamide polymer, for the purpose of determining the weight ratio of the glass to the polyamide polymer, may include the weight of the additives in addition to the weight of the polymer. In other instances, the weight of the polyamide polymer, for the purpose of determining the weight ratio of the glass to the polyamide polymer, includes the weight of the polymer alone (whether or not additives are included in the build material composition). The weight ratio of the glass to the polyamide polymer may depend, in part, on the desired properties of the 3D object to be formed, the glass used, the polyamide polymer used, and/or the additives included in the polyamide polymer.

In one example, the glass may be selected from the group consisting of solid glass beads, hollow glass beads, porous glass beads, glass fibers, crushed glass, and a combination thereof. In another example, the glass may be selected from the group consisting of soda lime glass (Na₂O/CaO/SiO₂), borosilicate glass, phosphate glass, fused quartz, and a combination thereof. In still another example, the glass may be selected from the group consisting of soda lime glass, borosilicate glass, and a combination thereof. In yet other examples, the glass may be any type of non-crystalline silicate glass.

In some examples, a surface of the glass may be modified with a functional group selected from the group consisting of an acrylate functional silane, a methacrylate functional silane, an epoxy functional silane, an ester functional silane, an amino functional silane, and a combination thereof. Examples of the glass modified with such functional groups and/or such functional groups that may be used to modify the glass are available from Potters Industries, LLC (e.g., an epoxy functional silane or an amino functional silane), Gelest, Inc. (e.g., an acrylate functional silane or a methacrylate functional silane), Sigma-Aldrich (e.g., an ester functional silane), etc. In an example, the surface of the glass is modified with an amino functional silane. In another example, the surface of the glass may be modified with an epoxy functional silane. In other examples, a surface of the glass is not modified with any functional group.

One specific example of the polyamide material is ORGASOL^{®} 2002 ES6 NAT (polyamide 12 available from Arkema). ORGASOL^{®} 2002 ES6 NAT includes no or substantially no antioxidants or polymer stabilization additives. Another specific example of the polyamide material is natural PA-6 with 40% glass bead reinforcement. Still other examples include Nylon 12 from Sigma-Aldrich or base resins available from A. Schulman, RTP, Techmer PM, etc.

Some examples of the polyamide material may be used in selective laser sintering (SLS). In selective laser sintering, a laser beam is aimed at a selected region (e.g., less than the entire layer) of a layer of build material, and heat from the laser beam causes the build material under the laser beam to coalesce/fuse. Build material used in selective laser sintering may be exposed to high temperatures for less time than build material that is used in a 3D printing process with a fusing agent (e.g., one to twenty hours less). As such, polyamide material that is intended for use in selective laser sintering may be formulated to withstand brief exposure to high temperatures in a minimum oxygen environment and not to withstand prolonged exposure to high temperatures in an air environment. The antioxidant disclosed herein improves the ability of polyamide material to withstand prolonged exposure to high temperatures in an air environment (to which the polyamide material may be exposed as part of the method for 3D printing disclosed herein).

### Antioxidants

As mentioned above, the antioxidant consists of the aromatic multihydrazide; or the aromatic sulfonomonohydrazide; or the hydrazide having the formula (I): 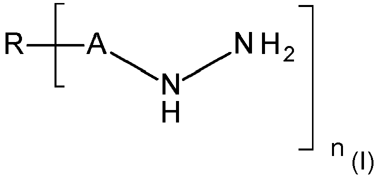 wherein R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof, A is C=O, O=S=O, P=O, or C=S, and n is an integer ranging from 1 to 4; or the formula (II): 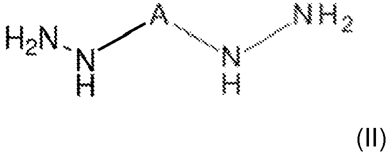 wherein A is C=O, O=S=O, P=O, or C=S.

As such, the antioxidant disclosed herein includes at least one hydrazide moiety. As used herein, a hydrazide moiety is characterized as including a nitrogen to nitrogen covalent bond (N-N) with four substituents, at least one of which is an acyl group (C=O), a sulfonyl group (O=S=O), a phosphine oxide group (P=O), or a thiocarbonyl group (C=S). In many examples, the other three substituents of the hydrazide are hydrogen atoms (H). The term "hydrazide" may refer to any of the following: monohydrazides, dihydrazides, trihydrazides, and tetrahydrazides, and thus does not infer a particular number of hydrazide moieties. Monohydrazides include one hydrazide moiety, which includes the N-N covalent bond and the acyl group, sulfonyl group, phosphine oxide group, or thiocarbonyl group. Dihydrazides include two hydrazide moieties. In some dihydrazides, each hydrazide moiety includes the N-N covalent bond and the acyl group, sulfonyl group, phosphine oxide group, or thiocarbonyl group. In other dihydrazides, the hydrazide moieties share the same acyl group, sulfonyl group, phosphine oxide group, or thiocarbonyl group (e.g., see formula II). Trihydrazides include three hydrazide moieties, each of which includes the N-N covalent bond and the acyl group, sulfonyl group, phosphine oxide group, or thiocarbonyl group. Tetrahydrazides include four hydrazide moieties, each of which includes the N-N covalent bond and the acyl group, sulfonyl group, phosphine oxide group, or thiocarbonyl group.

In some examples, the at least one hydrazide moiety of the antioxidant may enable the antioxidant to scavenge (i.e., consume) molecular oxygen. For example, carbohydrazide, (CH₆N₄O) may react with oxygen (O₂) to produce carbon dioxide (CO₂), nitrogen (N₂), and water (H₂O) according to following reaction:

CH₆N₄O + 2 O₂ → CO₂ + N₂ + 3 H₂O

As such, the antioxidant may prevent or slow the oxidation of the polyamide material, which may reduce the discoloration of the polyamide material and/or improve the reusability/recyclability of the polyamide material. Other hydrazide derivatives may react differently, and may generate different products and byproducts of degradation. The hydrazide may be selected that is best suitable for preventing or slowing the oxidation of the particular polyamide material being used.

In some examples, the antioxidant includes the aromatic multihydrazide. As used herein, the term "multihydrazide" refers to a dihydrazide, a trihydrazide, or a tetrahydrazide. The aromatic multihydrazide may be an aromatic dihydrazide, an aromatic trihydrazide, or an aromatic tetrahydrazide. In an example, the aromatic multihydrazide is an aromatic dihydrazide.

In some examples, the aromatic multihydrazide is non-phenolic. As used herein, the term "non-phenolic" refers to a compound that does not include a phenol group (i.e., 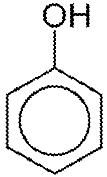 ). The aromatic multihydrazide may be a non-phenolic aromatic dihydrazide, a non-phenolic aromatic trihydrazide, or a non-phenolic aromatic tetrahydrazide. In an example, the aromatic multihydrazide is a non-phenolic aromatic dihydrazide.

In some examples, the aromatic multihydrazide is an aromatic dihydrazide having the general formula: 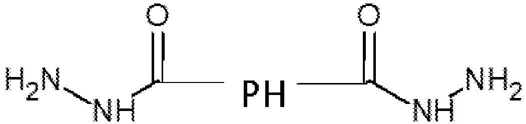 wherein PH is selected from an unsubstituted phenyl group and a substituted phenyl group.

When PH is an unsubstituted phenyl group, the aromatic dihydrazide may be selected from the group consisting of isophthalic dihydrazide; phthalic dihydrazide; and terephthalic dihydrazide. The structures of these aromatic dihydrazides are shown in Table 1.

**Table 1**

| **Chemical name** | **Chemical Structure** |
|---|---|
| Isophthalic Dihydrazide | 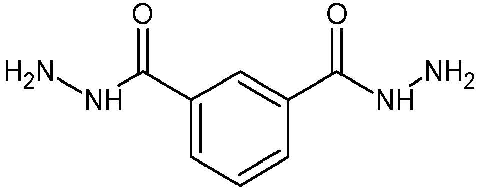 |
| Phthalic Dihydrazide | 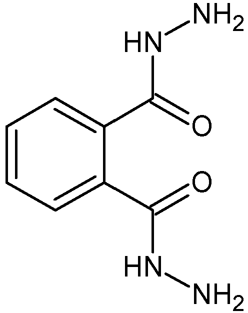 |
| Terephthalic dihydrazide | 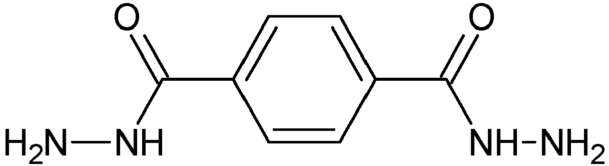 |

When PH is a substituted phenyl group, examples of groups that may be substituted on the phenyl group include a halide functional group (e.g., Cl, Br, etc.), an amine functional group (-NH₂), a nitro functional group (-NO₂), and a sulfo functional group (-SO₃H). In an example when PH of the aromatic dihydrazide is a substituted phenyl group, the substituted phenyl group is selected from the group consisting of a halide functional group, an amine functional group, a nitro functional group, and a sulfo functional group.

In another example when PH is a substituted phenyl group, the aromatic dihydrazide is selected from the group consisting of 3-choloro-isophthalic dihydrazide; 3-choloro-phthalic dihydrazide; 2-choloro-terephtahlic dihydrazide; 3-bromo-isophtahlic dihydrazide; 3-bromo-phthalic dihydrazide; 2-bromo-terephtahlic dihydrazide; 3-sulfo-isophtahlic dihydrazide; 3-nitro-isophtahlic dihydrazide; 3-nitro-phthalic dihydrazide; 2-nitro-terephthalic dihydrazide; 3-amino-isophthalic dihydrazide; 2-amino-terephthalic dihydrazide; and 3-amino-phthalic dihydrazide. The structures of these aromatic dihydrazides are shown in Table 2.

**Table 2**

| **Chemical name** | **Chemical Structure** |
|---|---|
| 3-choloro-isophthalic dihydrazide | 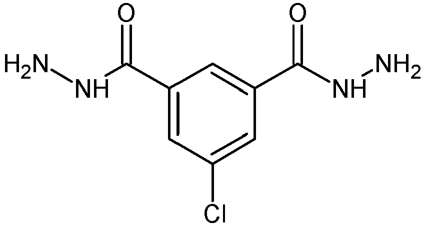 |
| 3-choloro-phthalic dihydrazide | 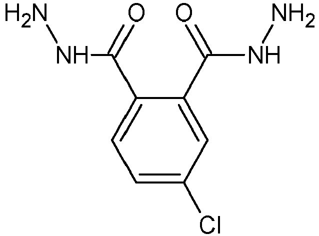 |
| 2-choloro-terephtahlic dihydrazide | 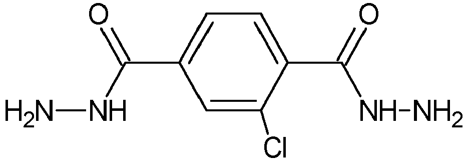 |
| 3-bromo-isophtahlic dihydrazide | 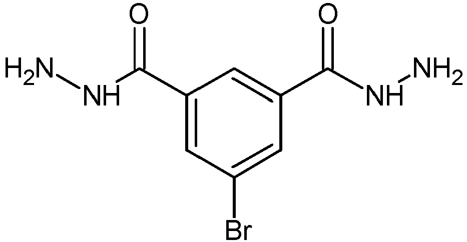 |
| 3-bromo-phthalic dihydrazide | 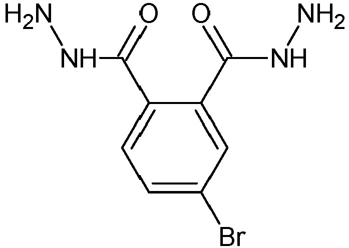 |
| 2-bromo-terephtahlic dihydrazide | 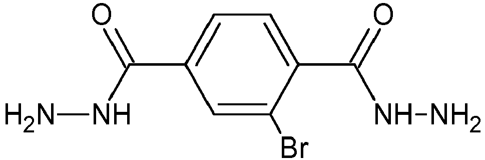 |
| 3-sulfo-isophtahlic dihydrazide | 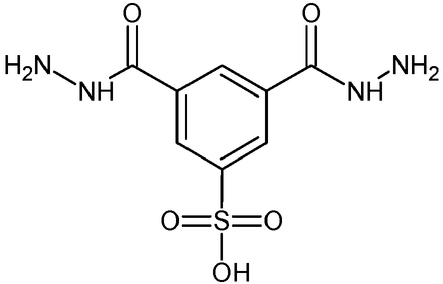 |
| 3-nitro-isophtahlic dihydrazide | 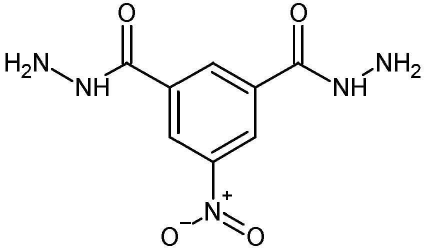 |
| 3-nitro-phthalic dihydrazide | 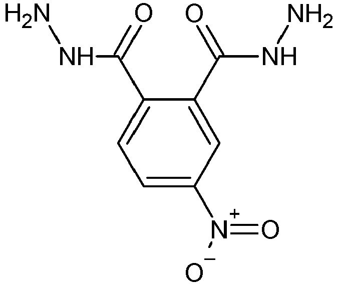 |
| 2-nitro-terephthalic dihydrazide | 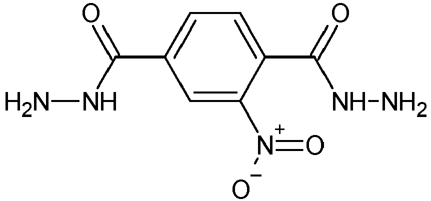 |
| 3-amino-isophthalic dihydrazide | 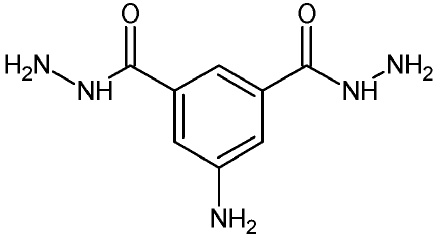 |
| 2-amino-terephthalic dihydrazide | 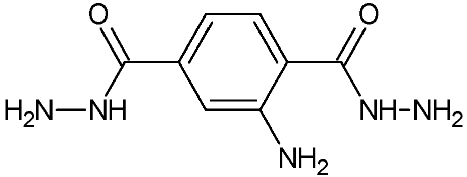 |
| 3-amino-phthalic dihydrazide | 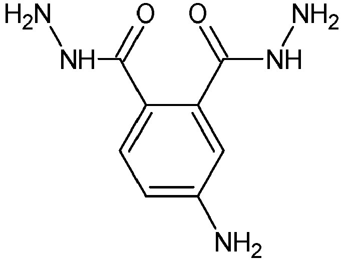 |

In some examples, the aromatic multihydrazide is an aromatic trihydrazide having the general formula: 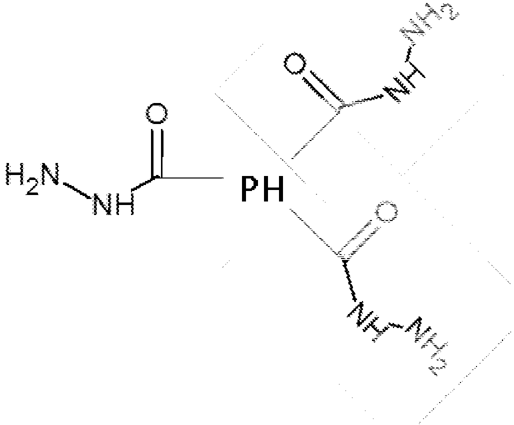 wherein PH is selected from an unsubstituted phenyl group and a substituted phenyl group.

Similar to the aromatic dihydrazide, when PH of the aromatic trihydrazide is a substituted phenyl group, examples of groups that may be substituted on the phenyl group include a halide functional group (e.g., Cl, Br, etc.), an amine functional group (-NH₂), a nitro functional group (-NO₂), and a sulfo functional group (-SO₃H). In an example when PH of the aromatic trihydrazide is a substituted phenyl group, the substituted phenyl group is selected from the group consisting of a halide functional group, an amine functional group, a nitro functional group, and a sulfo functional group.

In some examples, the aromatic multihydrazide is an aromatic tetrahydrazide having the general formula: 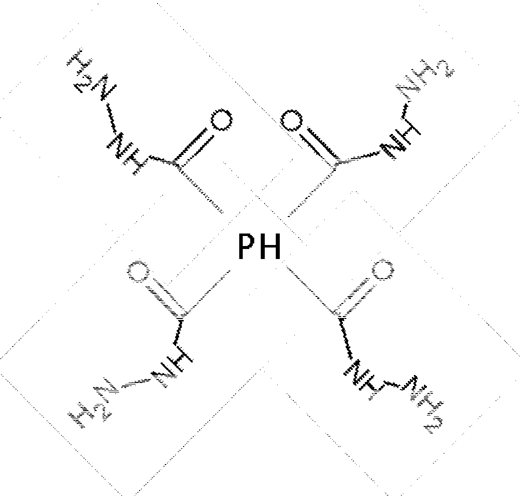 wherein PH is selected from an unsubstituted phenyl group and a substituted phenyl group.

Similar to the aromatic dihydrazide, when PH of the aromatic tetrahydrazide is a substituted phenyl group, examples of groups that may be substituted on the phenyl group include a halide functional group (e.g., Cl, Br, etc.), an amine functional group (-NH₂), a nitro functional group (-NO₂), and a sulfo functional group (-SO₃H). In an example when PH of the aromatic tetrahydrazide is a substituted phenyl group, the substituted phenyl group is selected from the group consisting of a halide functional group, an amine functional group, a nitro functional group, and a sulfo functional group.

In another example, the PH includes two phenyl groups, each of which includes three nitrogen atoms within the aromatic ring. These nitrogen-containing phenyl groups may be separated by, for example, HN-CH₂-CH₂-NH, piperazine, HN-C₆H₄-NH, or HN-C₆H₄-NH. In this example, two hydrazides are attached to each of the PH groups through an -HN-CH₂- linkage.

In some examples, the aromatic multihydrazide is an aromatic sulfonodihydrazide, an aromatic phosphonic dihydrazide, or an aromatic thiocarbohydrazide. In an example, the aromatic multihydrazide is an aromatic sulfonodihydrazide. An example of an aromatic sulfonodihydrazide is oxbisbenzene sulfonylhydrazide. The structure of oxbisbenzene sulfonylhydrazide is:

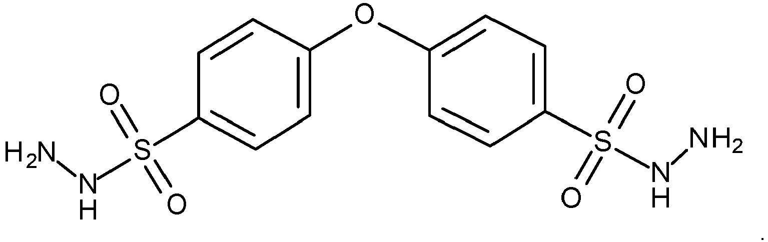

In some examples, the antioxidant includes the aromatic sulfonomonohydrazide. In some of these examples, the aromatic sulfonomonohydrazide is selected from the group consisting of benzenesulfonyl hydrazide; 2,4,6-triisopropylbenzenesulfonyl hydrazide; 2,4,6-trimethylbenzenesulfonohydrazide; and a combination thereof. The structures of these aromatic sulfonomonohydrazides are shown in Table 3.

**Table 3**

| **Chemical name** | **Chemical Structure** |
|---|---|
| Benzenesulfonyl hydrazide | 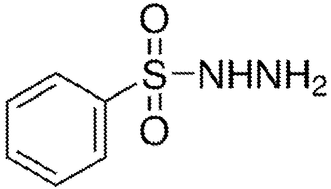 |
| 2,4,6-triisopropylbenzenesulfonyl hydrazide | 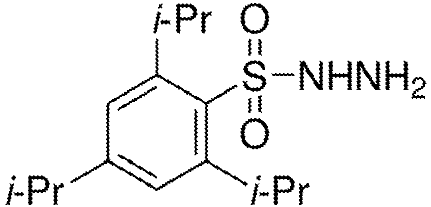 |
| 2,4,6-trimethylbenzenesulfonohydrazide | 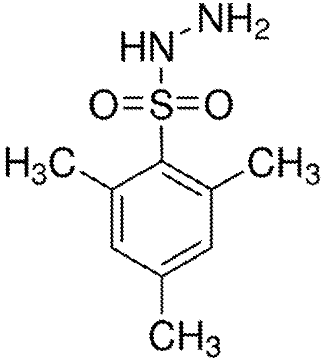 |

In some examples, the antioxidant is the hydrazide having formula (I). As mention above, formula (I) is 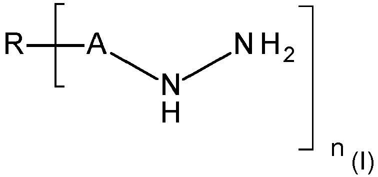 wherein R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof, A is C=O, O=S=O, P=O, or C=S, and n is an integer ranging from 1 to 4. In formula (I), when R is polyethylene glycol: 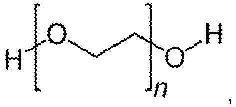 the *n* of the polyethylene glycol may range from 1 to 20. In some instances, the PEG-based hydrazides may have a distribution of *n* values for the polyethylene glycol. Also in formula (I), it is to be understood that when R is null, n is 2 and two hydrazide moieties are linked together at their respective A moieties without an intervening R group. An example of when R is null is oxalyl dihydrazide.

In some of these examples, A is C=O, and n is 2. In some of these examples, the hydrazide is selected from the group consisting of adipic acid dihydrazide (also known as adipic dihydrazide), oxalyl dihydrazide, succinic dihydrazide, azelaic dihydrazide, sebacic dihydrazide, dodecanedioic dihydrazide, and a combination thereof.

In others of these examples, A is O=S=O or P=O. When A is O=S=O, the hydrazide is a sulfonohydrazide. The hydrazide may be a sulfonomonohydrazide or a sulfonodihydrazide. In an example, the hydrazide is a sulfonodihydrazide. When A is P=O, the hydrazide is a phosphonic hydrazide. The hydrazide may be a phosphonic monohydrazide or a phosphonic dihydrazide. In an example, the hydrazide is a phosphonic dihydrazide.

In still others of these examples, A is C=S, and the hydrazide is a thiocarbohydrazide.

In one specific example, the hydrazide is selected from the group consisting of adipic acid dihydrazide (also known as adipic dihydrazide), oxalyl dihydrazide, succinic dihydrazide, azelaic dihydrazide, sebacic dihydrazide, dodecanedioic dihydrazide, a monofunctional polyethylene glycol (PEG) hydrazide, a bifunctional polyethylene glycol (PEG) hydrazide, a four arm polyethylene glycol (PEG) hydrazide, an eight arm polyethylene glycol (PEG) hydrazide, a tetraethylene glycol octadecyl ether hydrazide, a hexaethylene glycol octadecyl ether hydrazide, a dodecaethylene glycol octadecyl ether hydrazide, and a combination thereof. The structures of these hydrazides are shown in Table 4. It is to be understood that "n" in any of the PEG hydrazide structures in Table 4 may range from 1 to 20.

**Table 4**

| **Chemical name** | **Chemical Structure** |
|---|---|
| Adipic acid dihydrazide | 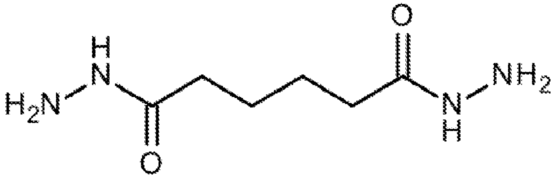 |
| Oxalyl dihydrazide | 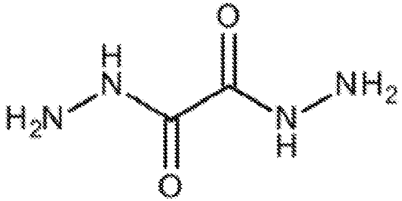 |
| Succinic dihydrazide | 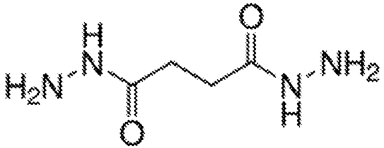 |
| Azelaic dihydrazide | 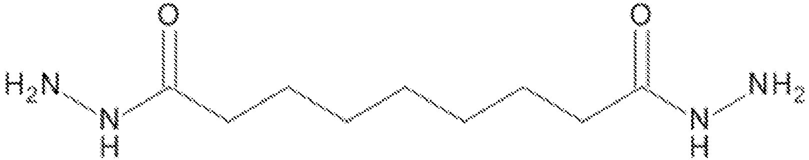 |
| Sebacic dihydrazide | 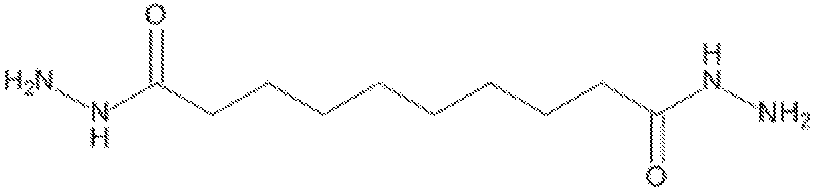 |
| Dodecanedioic dihydrazide | 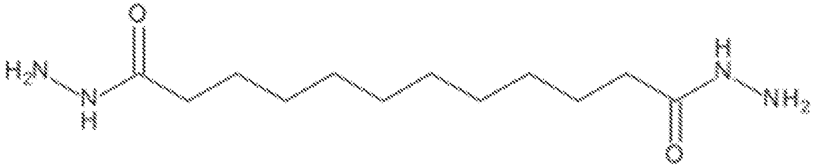 |
| Monofunctional PEG hydrazide | 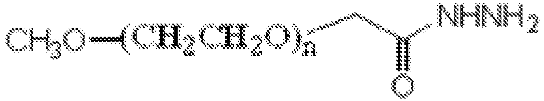 |
| Bifunctional PEG hydrazide | 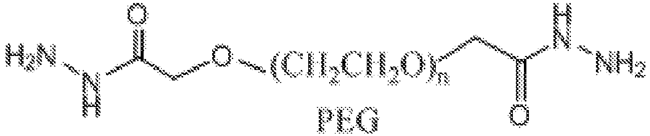 |
| Four arm PEG hydrazide | 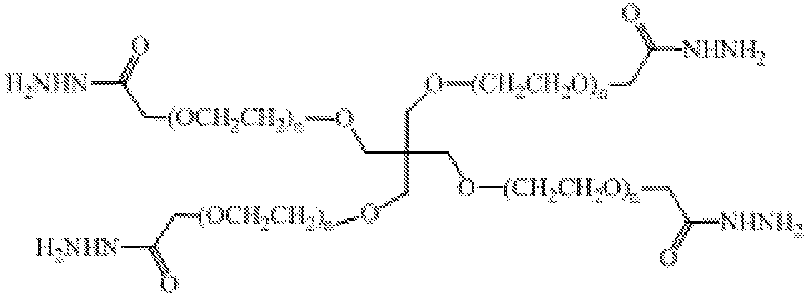 |
| Eight arm PEG hydrazide | 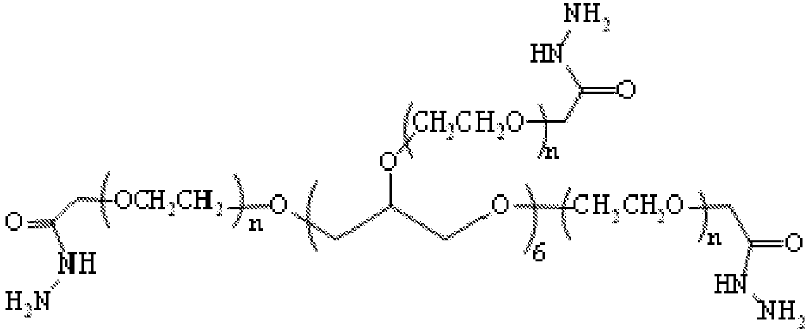 |
| Tetraethylene glycol octadecyl ether hydrazide | 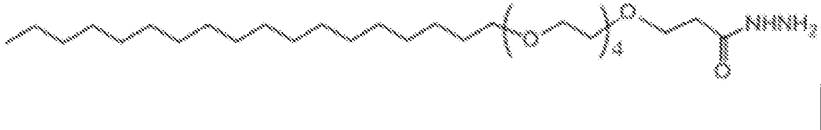 |
| Hexaethylene glycol octadecyl ether hydrazide | 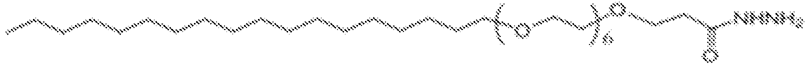 |
| Dodecaethylene glycol octadecyl ether hydrazide | 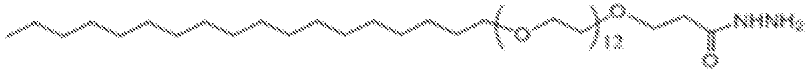 |

In some examples, the antioxidant includes the hydrazide having formula (II). As mention above, formula (II) is 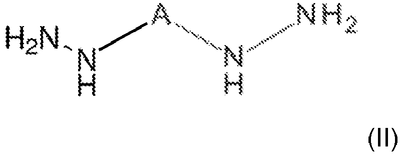 wherein A is C=O, O=S=O, P=O, or C=S.

In one of these examples, the hydrazide is carbohydrazide. In this example, A is C=O. In others of these examples, A is O=S=O or A is P=O. When A is O=S=O, the hydrazide is sulfuryl hydrazide. When A is P=O, the hydrazide is phosphonic hydrazide (known as phosphonic dihydrazide). In still another of these examples, A is C=S. In this example, the hydrazide is thiocarbohydrazide. The structures of these hydrazides are shown in Table 5.

**Table 5**

| **Chemical name** | **Chemical Structure** |
|---|---|
| Carbohydrazide | 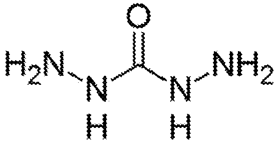 |
| Sulfuryl hydrazide | 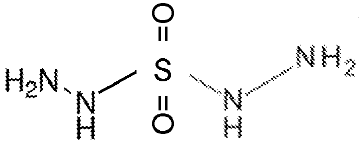 |
| Phosphonic dihydrazide | 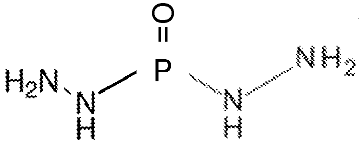 |
| Thiocarbohydrazide | 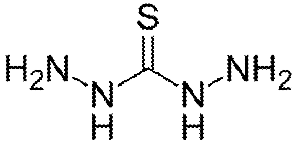 |

In the examples disclosed herein, any of the examples of the antioxidant may be used alone or in combination.

In some examples, the antioxidant is present in the build material composition in an amount ranging from about 0.05 wt% to about 2 wt%, based on a total weight of the build material composition. In one of these examples, the antioxidant includes the hydrazide having formula (I), and the antioxidant is present in the build material composition in an amount ranging from about 0.05 wt% to about 2 wt%, based on a total weight of the build material composition. In other examples, the antioxidant is present in the build material composition in an amount ranging from about 0.1 wt% to about 1 wt%, based on a total weight of the build material composition. In one of these examples, the antioxidant includes the hydrazide having formula (II), and the antioxidant is present in the build material composition in an amount ranging from about 0.1 wt% to about 1 wt%, based on a total weight of the build material composition. In still other examples, the antioxidant is present in the build material composition in an amount of 0.1 wt%, 0.3 wt%, 0.4 wt%, 0.6 wt%, 1.0 wt%, or 2 wt%, based on a total weight of the build material composition.

### Second Antioxidants

In some examples, the build material composition includes substantially no antioxidants or polymer stabilization additives in addition to the hydrazide examples disclosed herein. As mentioned herein, substantially no antioxidants or polymer stabilization additives means that a second antioxidant may be included in the build material composition in an amount of less than 0.1 wt%, based on the total weight of the build material composition.

If another (e.g., a second) antioxidant is included in this very small amount, the second antioxidant may be selected from the group consisting of a hindered amine, an aromatic amine, a hindered phenol, an inorganic phosphite, an organic sulfide, and a combination thereof.

In some examples, the second antioxidant may involve a primary mechanism, such as radical trapping, and a secondary mechanism, such as hydroperoxide decomposing, to stabilize the polyamide material. In these examples, the second antioxidant may be a hindered amine, some of which are known as hindered amine light stabilizer (HALS). Examples of suitable hindered amines include 4,4'-Bis(α,α-dimethylbenzyl)diphenylamine or the commercially available light stabilizers TINUVIN^{®} 123, 144, and 292 (from BASF Corp.).

In other examples, the second antioxidant may be a radical scavenger. The second antioxidant may act as a hydrogen atom donor to quench polymer radicals (reactive free radicals) and stabilize the polyamide material. In these examples, the second antioxidant may be a bis hindered phenol. Examples of suitable bis hindered phenols include IRGANOX^{®} 1098 (benzenepropanamide, N,N'-1,6-hexanediylbis(3,5-bis(1,1-dimethylethyl)-4-hydroxy)); IRGANOX^{®} 254 (a mixture of 40% triethylene glycol bis(3-tert-butyl-4-hydroxy-5-methylphenyl), polyvinyl alcohol and deionized water); and 2,2'-methylenebis(6-tert-butyl-4-methylphenol).

In still other examples, the second antioxidant may react with an intermediate degradation product of the polymer radicals and molecular oxygen (e.g., a hydroperoxide) to stabilize the polyamide material. In some of these examples, the second antioxidant may be an inorganic phosphite. Examples of suitable inorganic phosphites include tris(2,4-ditert-butylphenyl) phosphite, and BRUGGOLEN^{®} H10 (an inorganic phosphite available from Brüggemann Chemical). In others of these examples, the second antioxidant may be an organic sulfide, such as a thioester. Examples of suitable thioesters include dilauryl thiodipropionate (DLTDP) (commercially available from Struktol Company of America under the tradename CARSTAB^{®} DLTDP); and dioctadecyl 3,3'-thiodipropionate (DSTDP) (commercially available from Struktol Company of America under the tradename CARSTAB^{®} DSTDP).

While examples of the build material composition including the second antioxidant have been described herein, it is to be understood that, in some examples, the build material composition does not include the second antioxidant.

### Additives

In some examples, the build material composition consists of the polyamide material (which in some instances includes the glass) and the antioxidant with no other components. In other examples, the build material composition includes the polyamide, the antioxidant, and the second antioxidant in a very small amount as disclosed herein. In still other examples, the build material composition may include the polyamide, the antioxidant, and additional components. Examples of suitable additives include a filler, a whitener, an antistatic agent, a flow aid, or a combination thereof. While several examples of these additives are provided, it is to be understood that these additives are selected to be thermally stable (i.e., will not decompose) at the 3D printing temperatures.

Filler(s) may be added to the build material composition to modify the properties of the 3D parts to be printed. Examples of suitable fillers include glass (as described herein), alumina, silica, talc, and a combination thereof. In an example, the filler may be included in the build material composition in an amount ranging from about 1 wt% to about 60 wt%, based on the total weight of the build material composition.

Whitener(s) may be added to the build material composition to improve visibility. Examples of suitable whiteners include titanium dioxide (TiO₂), zinc oxide (ZnO), calcium carbonate (CaCO₃), zirconium dioxide (ZrO₂), aluminum oxide (Al₂O₃), silicon dioxide (SiO₂), boron nitride (BN), and combinations thereof. In some examples, a stilbene derivative may be used as the whitener and a brightener. In these examples, the temperature(s) of the 3D printing process may be selected so that the stilbene derivative remains stable (i.e., the 3D printing temperature does not thermally decompose the stilbene derivative). In an example, any example of the whitener may be included in the build material composition in an amount ranging from greater than 0 wt% to about 10 wt%, based on the total weight of the build material composition.

Antistatic agent(s) may be added to the build material composition to suppress tribo-charging. Examples of suitable antistatic agents include aliphatic amines (which may be ethoxylated), aliphatic amides, quaternary ammonium salts (e.g., behentrimonium chloride or cocamidopropyl betaine), esters of phosphoric acid, polyethylene glycolesters, or polyols. Some suitable commercially available antistatic agents include HOSTASTAT^{®} FA 38 (natural based ethoxylated alkylamine), HOSTASTAT^{®} FE2 (fatty acid ester), and HOSTASTAT^{®} HS 1 (alkane sulfonate), each of which is available from Clariant Int. Ltd.). In an example, the antistatic agent is added in an amount ranging from greater than 0 wt% to less than 5 wt%, based upon the total weight of the build material composition.

Flow aid(s) may be added to improve the coating flowability of the build material composition. Flow aids may be particularly beneficial when the build material composition has an average particle size less than 25 µm. The flow aid improves the flowability of the build material composition by reducing the friction, the lateral drag, and the tribocharge buildup (by increasing the particle conductivity). Examples of suitable flow aids include aluminum oxide (Al₂O₃), tricalcium phosphate (E341), powdered cellulose (E460(ii)), magnesium stearate (E470b), sodium bicarbonate (E500), sodium ferrocyanide (E535), potassium ferrocyanide (E536), calcium ferrocyanide (E538), bone phosphate (E542), sodium silicate (E550), silicon dioxide (E551), calcium silicate (E552), magnesium trisilicate (E553a), talcum powder (E553b), sodium aluminosilicate (E554), potassium aluminum silicate (E555), calcium aluminosilicate (E556), bentonite (E558), aluminum silicate (E559), stearic acid (E570), and polydimethylsiloxane (E900). In an example, the flow aid is added in an amount ranging from greater than 0 wt% to less than 5 wt%, based upon the total weight of the build material composition.

In some examples, the build material composition disclosed herein may be reused/recycled. After a print cycle, some of the build material composition disclosed herein remains non-coalesced/non-fused, and can be reclaimed and used again. This reclaimed build material is referred to as the recycled build material composition. The recycled build material composition may be exposed to 2, 4, 6, 8, 10, or more build cycles (i.e., heating to a temperature ranging from about 50°C to about 205°C and then cooling), and reclaimed after each cycle. Between cycles, the recycled build material composition may be mixed with at least some fresh (i.e., not previously used in a 3D printing process) build material composition. In some examples, the weight ratio of the recycled build material composition to the fresh build material composition may be 90:10, 80:20, 70:30, 60:40, 50:50, or 40:60. The weight ratio of the recycled build material composition to the fresh build material composition may depend, in part, on the stability of the build material composition, the discoloration of the recycled build material composition (as compared to the build material composition), the desired aesthetics for the 3D object being formed, the thermal decomposition of the recycled build material composition (as compared to the build material composition), and/or the desired mechanical properties of the 3D object being formed.

### 3D Printing Kits and Compositions

Any example of the build material composition described herein (e.g., including at least the polyamide material and the antioxidant) may be part of a 3D printing kit and/or a 3D printing composition.

In an example, the three-dimensional (3D) printing kit or composition, comprises: a build material composition including: a polyamide material; and an antioxidant consisting of: an aromatic multihydrazide; or an aromatic sulfonomonohydrazide; or a hydrazide having: a formula (I): 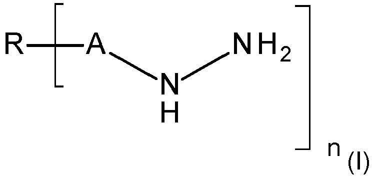 wherein: R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof; A is C=O, O=S=O, P=O, or C=S; and n is an integer ranging from 1 to 4; or a formula (II): 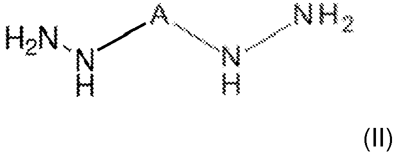 wherein A is C=O, O=S=O, P=O, or C=S; and a fusing agent to be applied to at least a portion of the build material composition during 3D printing, the fusing agent including an energy absorber to absorb energy to melt or fuse the build material composition in the at least the portion.

In some examples, the 3D printing kit or composition consists of the build material composition and the fusing agent with no other components. In other examples, the 3D printing kit or composition includes additional components, such as another fusing agent, a detailing agent, or a combination thereof. In still other examples, the 3D printing kit or composition consists of the build material composition, the fusing agent, and the other fusing agent with no other components. In yet other examples, the 3D printing kit or composition consists of the build material composition, the fusing agent(s), and the detailing agent with no other components.

As mentioned above, any example of the build material composition described herein, including at least the polyamide material and the antioxidant, may be used in examples of the 3D printing kit or composition. In one specific example, the antioxidant includes: the hydrazide having the formula (I), wherein A is C=O, and n is 2; or the hydrazide having the formula (II), wherein A is C=O.

As used herein, "material set" or "kit" may, in some instances, be synonymous with "composition." Further, "material set" and "kit" are understood to be compositions comprising one or more components where the different components in the compositions are each contained in one or more containers, separately or in any combination, prior to and during printing but these components can be combined together during printing. The containers can be any type of a vessel, box, or receptacle made of any material. As such, in any of the examples disclosed herein, the components of the 3D printing kit or composition may be maintained separately until used together in examples of the 3D printing method disclosed herein.

Throughout this disclosure, a weight percentage that is referred to as "wt% active" refers to the loading of an active component of a dispersion or other formulation that is present in, e.g., the fusing agent and/or the detailing agent. For example, an energy absorber, such as carbon black, may be present in a water-based formulation (e.g., a stock solution or dispersion) before being incorporated into the fusing liquid. In this example, the wt% actives of the carbon black accounts for the loading (as a weight percent) of the carbon black solids that are present in the fusing agent, and does not account for the weight of the other components (e.g., water, etc.) that are present in the stock solution or dispersion with the carbon black. The term "wt%," without the term actives, refers to either i) the loading (in the fusing agent or detailing agent) of a 100% active component that does not include other non-active components therein, or ii) the loading (in the fusing agent or detailing agent) of a material or component that is used "as is" and thus the wt% accounts for both active and non-active components.

Example compositions of the fusing agent and the detailing agent that are suitable for use in examples of the 3D printing kit or composition are described below.

### Fusing Agents

As mentioned above, in examples of the 3D printing kit and/or composition and the 3D printing method disclosed herein, a fusing agent may be used. As also mentioned above, the fusing agent includes an energy absorber.

### Energy Absorbers

In some examples, the energy absorber may have substantial absorption (e.g., 80%) at least in the visible region (400 nm - 780 nm) and may also absorb energy in the infrared region (e.g., 800 nm to 4000 nm). In other examples, the energy absorber may have absorption at wavelengths ranging from 800 nm to 4000 nm and have transparency at wavelengths ranging from 400 nm to 780 nm. As used herein, "absorption" means that at least 80% of radiation having wavelengths within the specified range is absorbed. Also as used herein, "transparency" means that 25% or less of radiation having wavelengths within the specified range is absorbed.

In some examples, the energy absorber may be an infrared light absorbing colorant. In an example, the energy absorber is a near-infrared light absorber. Any near-infrared colorants, e.g., those produced by Fabricolor, Eastman Kodak, or BASF, Yamamoto, may be used in the fusing agent. As one example, the fusing agent may be a printing liquid formulation including carbon black as the energy absorber. Examples of this printing liquid formulation are commercially known as CM997A, 516458, C18928, C93848, C93808, or the like, all of which are available from HP Inc.

As another example, the fusing agent may be a printing liquid formulation including near-infrared absorbing dyes as the energy absorber. Examples of this printing liquid formulation are described in U.S. Patent No. 9,133,344, incorporated herein by reference in its entirety. Some examples of the near-infrared absorbing dye are water-soluble near-infrared absorbing dyes selected from the group consisting of: 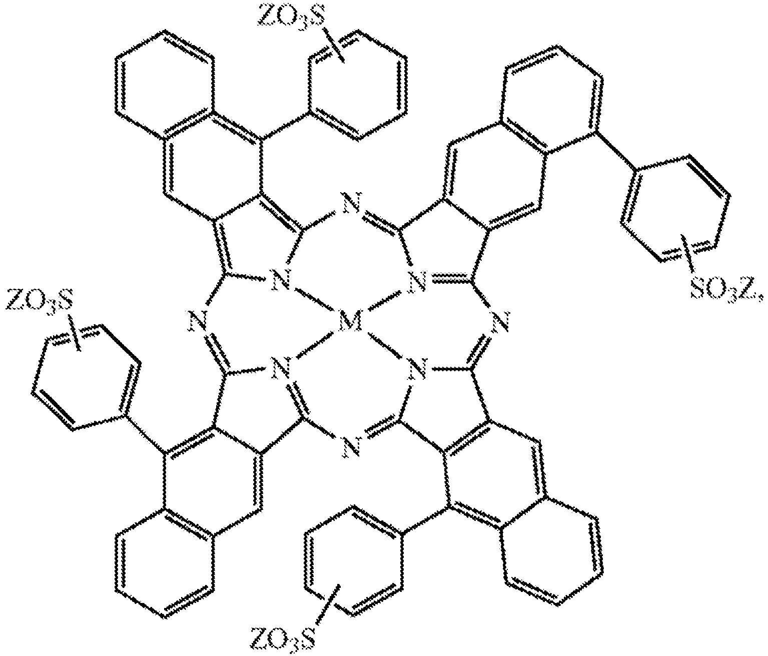 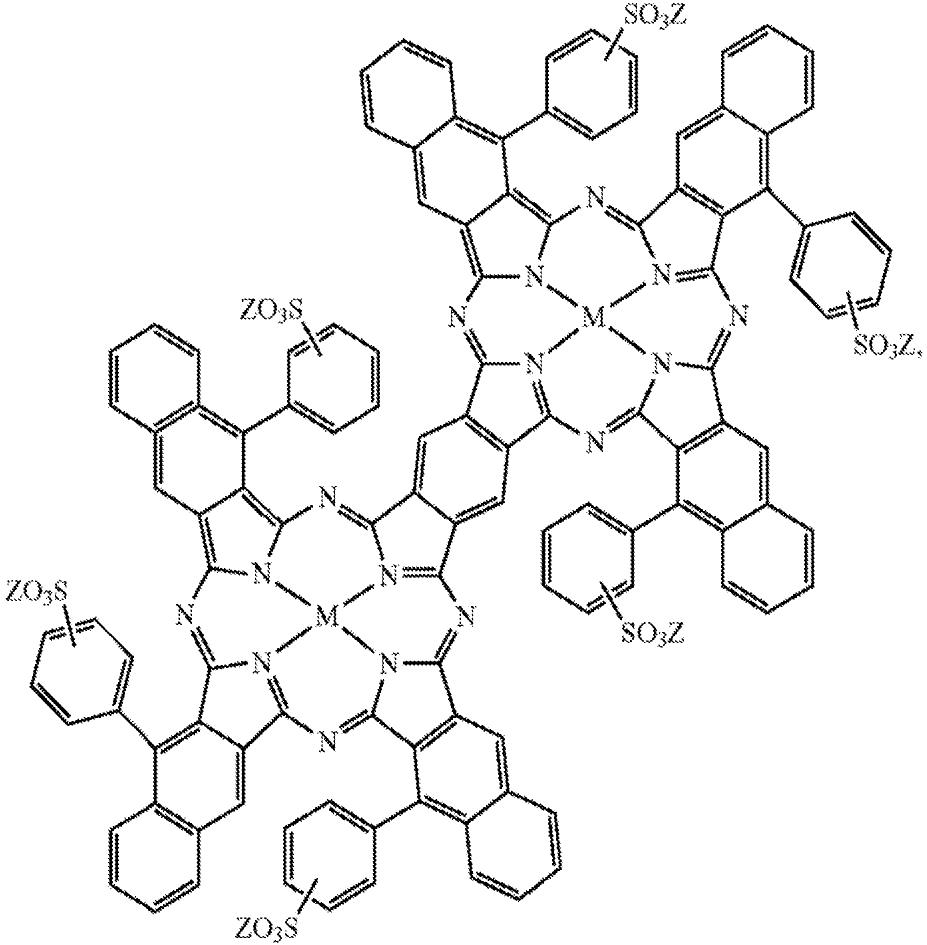 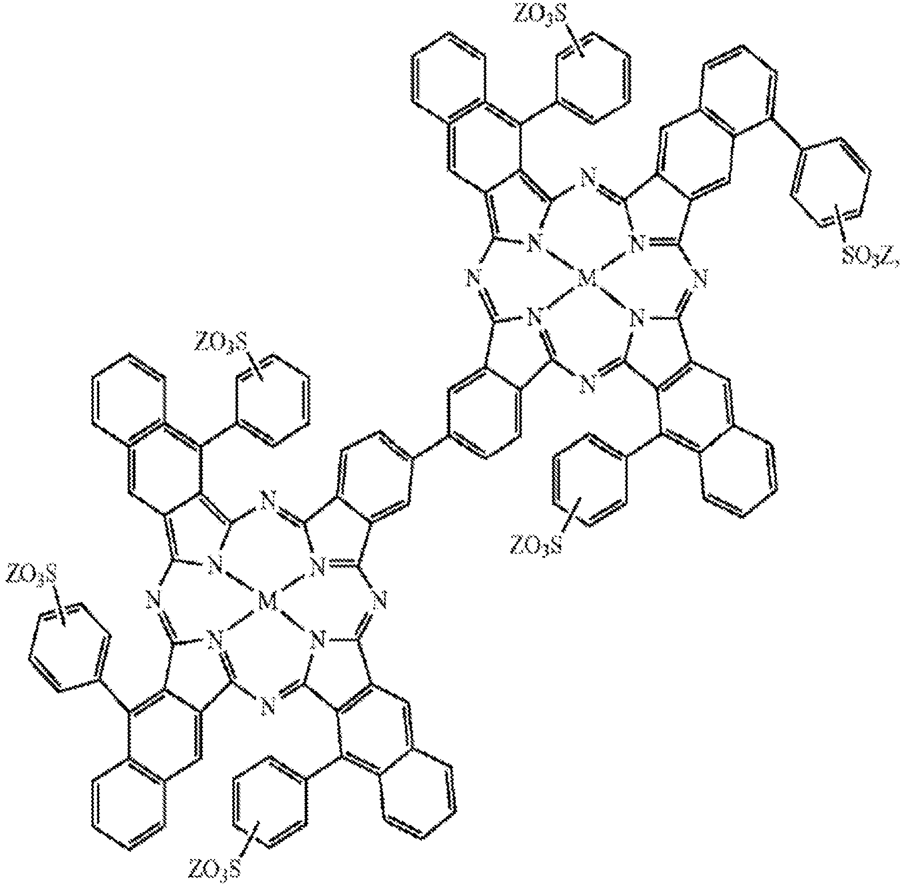 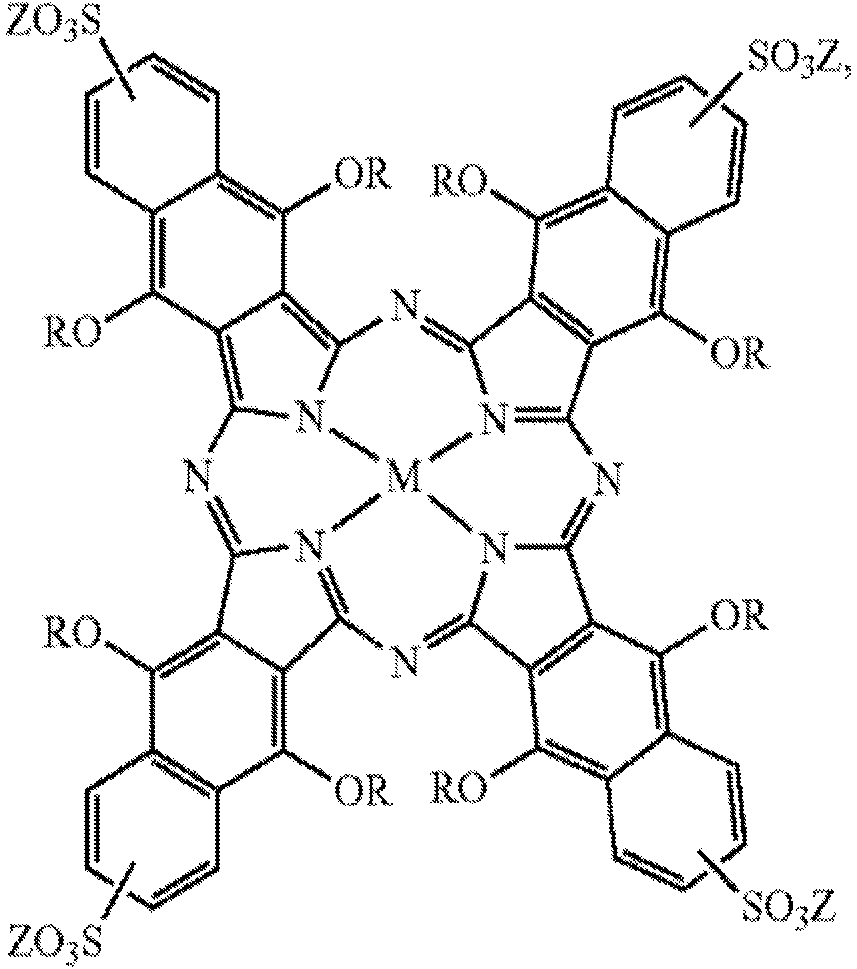 and mixtures thereof. In the above formulations, M can be a divalent metal atom (e.g., copper, etc.) or can have OSO₃Na axial groups filling any unfilled valencies if the metal is more than divalent (e.g., indium, etc.), R can be hydrogen or any C₁-C₈ alkyl group (including substituted alkyl and unsubstituted alkyl), and Z can be a counterion such that the overall charge of the near-infrared absorbing dye is neutral. For example, the counterion can be sodium, lithium, potassium, NH₄⁺, etc.

Some other examples of the near-infrared absorbing dye are hydrophobic near-infrared absorbing dyes selected from the group consisting of: 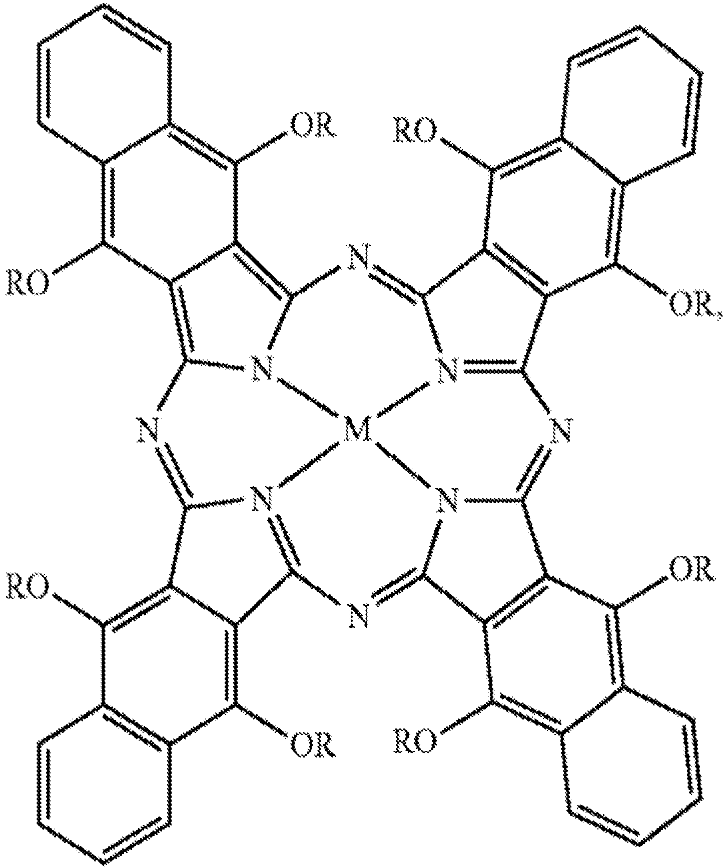 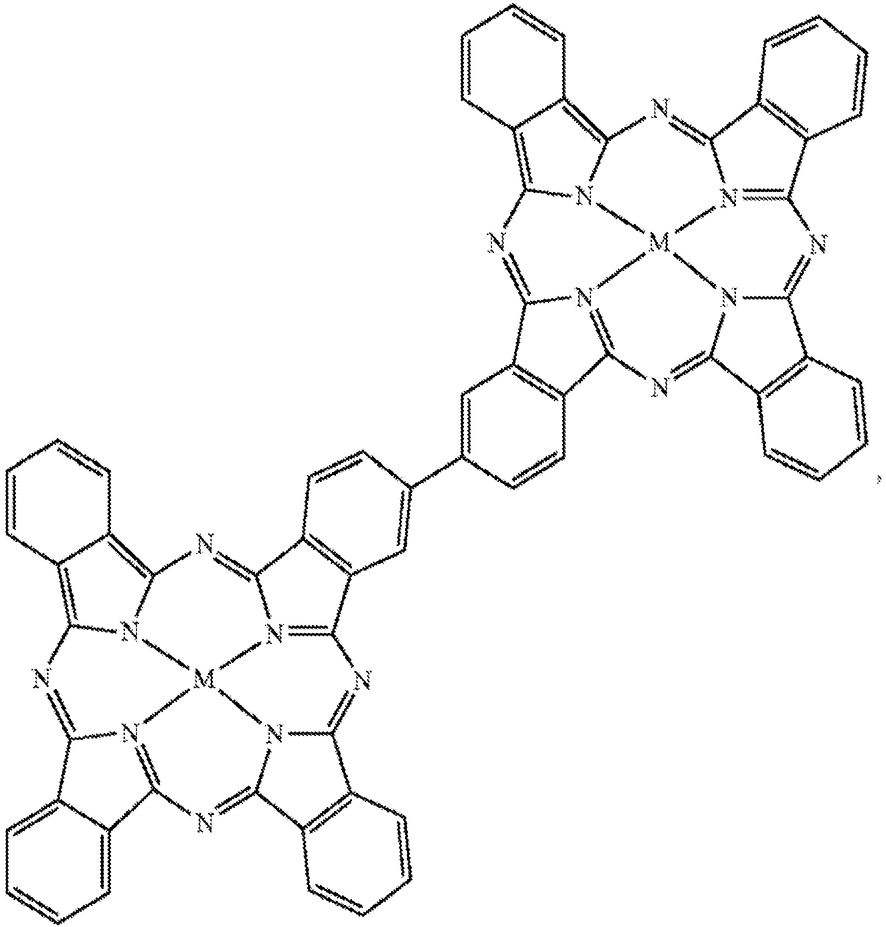 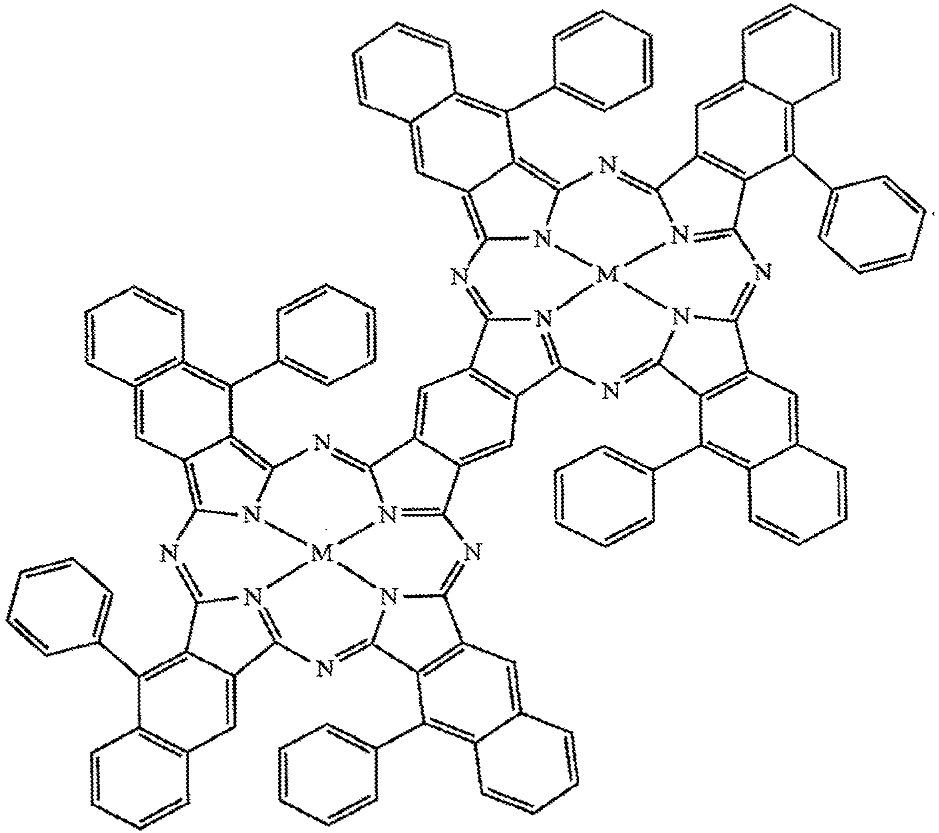 and mixtures thereof. For the hydrophobic near-infrared absorbing dyes, M can be a divalent metal atom (e.g., copper, etc.) or can include a metal that has Cl, Br, or OR' (R'=H, CH₃, COCH₃, COCH₂COOCH₃, COCH₂COCH₃) axial groups filling any unfilled valencies if the metal is more than divalent, and R can be hydrogen or any C₁-C₈ alkyl group (including substituted alkyl and unsubstituted alkyl).

Other near-infrared absorbing dyes or pigments may be used. Some examples include anthroquinone dyes or pigments, metal dithiolene dyes or pigments, cyanine dyes or pigments, perylenediimide dyes or pigments, croconium dyes or pigments, pyrilium or thiopyrilium dyes or pigments, boron-dipyrromethene dyes or pigments, or aza-boron-dipyrromethene dyes or pigments.

Anthraquinone dyes or pigments and metal (e.g., nickel) dithiolene dyes or pigments may have the following structures, respectively: 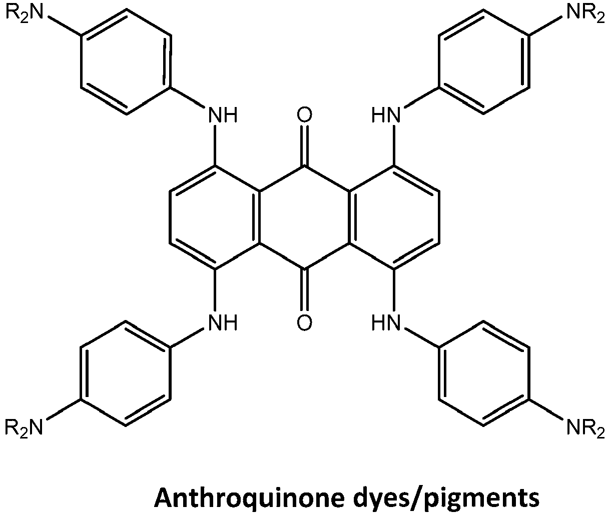 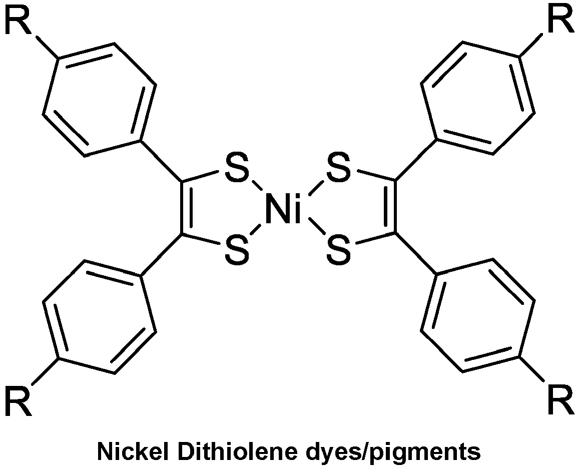 where R in the anthroquinone dyes or pigments may be hydrogen or any C₁-C₈ alkyl group (including substituted alkyl and unsubstituted alkyl), and R in the dithiolene may be hydrogen, COOH, SO₃, NH₂, any C₁-C₈ alkyl group (including substituted alkyl and unsubstituted alkyl), or the like.

Cyanine dyes or pigments and perylenediimide dyes or pigments may have the following structures, respectively: 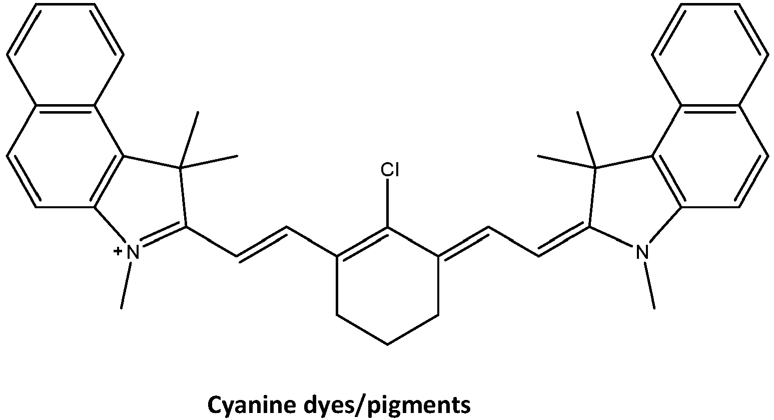 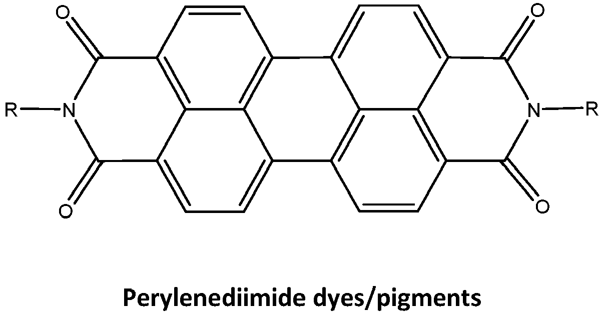 where R in the perylenediimide dyes or pigments may be hydrogen or any C₁-C₈ alkyl group (including substituted alkyl and unsubstituted alkyl).

Croconium dyes or pigments and pyrilium or thiopyrilium dyes or pigments may have the following structures, respectively:

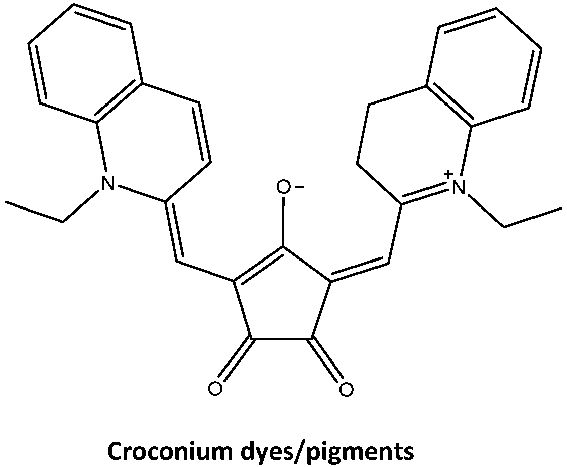

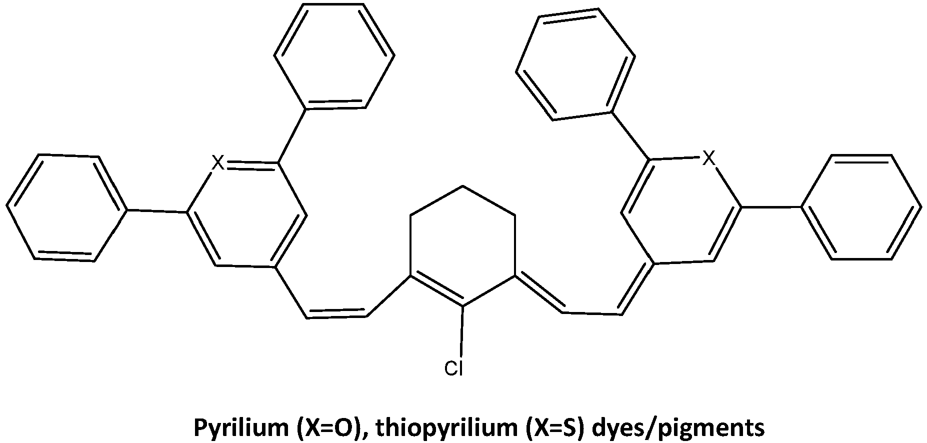

Boron-dipyrromethene dyes or pigments and aza-boron-dipyrromethene dyes or pigments may have the following structures, respectively:

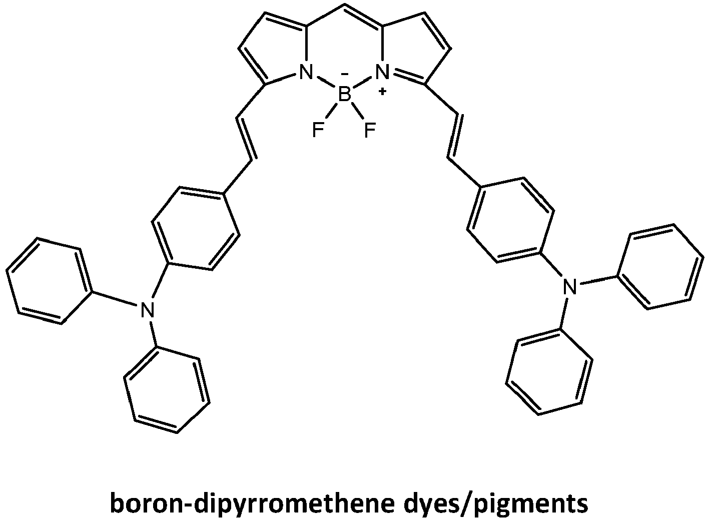

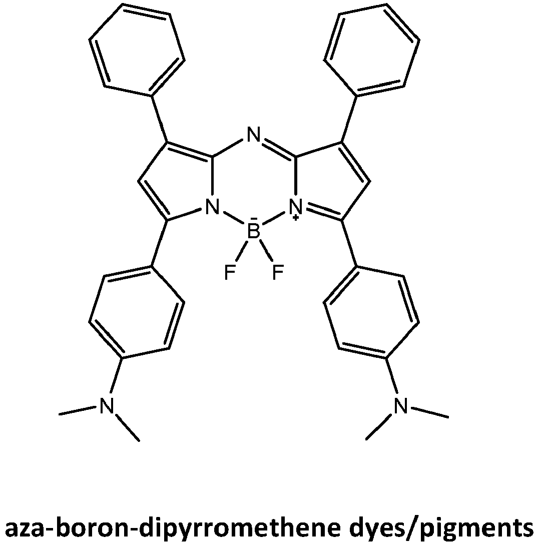

In other examples, the energy absorber may be the energy absorber that has absorption at wavelengths ranging from 800 nm to 4000 nm and transparency at wavelengths ranging from 400 nm to 780 nm. The absorption of this energy absorber is the result of plasmonic resonance effects. Electrons associated with the atoms of the energy absorber may be collectively excited by radiation, which results in collective oscillation of the electrons. The wavelengths that can excite and oscillate these electrons collectively are dependent on the number of electrons present in the energy absorber particles, which in turn is dependent on the size of the energy absorber particles. The amount of energy that can collectively oscillate the particle's electrons is low enough that very small particles (e.g., 1-100 nm) may absorb radiation with wavelengths several times (e.g., from 8 to 800 or more times) the size of the particles. The use of these particles allows the fusing agent to be inkjet jettable as well as electromagnetically selective (e.g., having absorption at wavelengths ranging from 800 nm to 4000 nm and transparency at wavelengths ranging from 400 nm to 780 nm).

In an example, this energy absorber has an average particle diameter (e.g., volume-weighted mean diameter) ranging from greater than 0 nm to less than 220 nm. In another example, the energy absorber has an average particle diameter ranging from greater than 0 nm to 120 nm. In a still another example, the energy absorber has an average particle diameter ranging from about 10 nm to about 200 nm.

In an example, this energy absorber is an inorganic pigment. Examples of suitable inorganic pigments include lanthanum hexaboride (LaB₆), tungsten bronzes (AₓWO₃), indium tin oxide (In₂O₃:SnO₂, ITO), antimony tin oxide (Sb₂O₃:SnO₂, ATO), titanium nitride (TiN), aluminum zinc oxide (AZO), ruthenium oxide (RuO₂), silver (Ag), gold (Au), platinum (Pt), iron pyroxenes (AₓFe_{y}Si₂O₆ wherein A is Ca or Mg, x = 1.5-1.9, and y = 0.1-0.5), modified iron phosphates (AₓFe_{y}PO₄), modified copper phosphates (AₓCu_{y}PO_{z}), and modified copper pyrophosphates (AₓCu_{y}P₂O₇). Tungsten bronzes may be alkali doped tungsten oxides. Examples of suitable alkali dopants (i.e., A in AₓWO₃) may be cesium, sodium, potassium, or rubidium. In an example, the alkali doped tungsten oxide may be doped in an amount ranging from greater than 0 mol% to about 0.33 mol% based on the total mol% of the alkali doped tungsten oxide. Suitable modified iron phosphates (AₓFe_{y}PO) may include copper iron phosphate (A = Cu, x = 0.1-0.5, and y = 0.5-0.9), magnesium iron phosphate (A = Mg, x = 0.1-0.5, and y = 0.5-0.9), and zinc iron phosphate (A = Zn, x = 0.1-0.5, and y = 0.5-0.9). For the modified iron phosphates, it is to be understood that the number of phosphates may change based on the charge balance with the cations. Suitable modified copper pyrophosphates (AₓCu_{y}P₂O₇) include iron copper pyrophosphate (A = Fe, x = 0-2, and y = 0-2), magnesium copper pyrophosphate (A = Mg, x = 0-2, and y = 0-2), and zinc copper pyrophosphate (A = Zn, x = 0-2, and y = 0-2). Combinations of the inorganic pigments may also be used.

The amount of the energy absorber that is present in the fusing agent ranges from greater than 0 wt% active to about 40 wt% active based on the total weight of the fusing agent. In other examples, the amount of the energy absorber in the fusing agent ranges from about 0.3 wt% active to 30 wt% active, from about 1 wt% active to about 20 wt% active, from about 1.0 wt% active up to about 10.0 wt% active, or from greater than 4.0 wt% active up to about 15.0 wt% active. It is believed that these energy absorber loadings provide a balance between the fusing agent having jetting reliability and heat and/or radiation absorbance efficiency.

### FA Vehicles

As used herein, "FA vehicle" may refer to the liquid in which the energy absorber is dispersed or dissolved to form the fusing agent. A wide variety of FA vehicles, including aqueous and non-aqueous vehicles, may be used in the fusing agent.

The solvent of the fusing agent may be water or a non-aqueous solvent (e.g., ethanol, acetone, n-methyl pyrrolidone, aliphatic hydrocarbons, etc.). In some examples, the fusing agent consists of the energy absorber and the solvent (without other components). In these examples, the solvent makes up the balance of the fusing agent. In other examples, the FA vehicle may include other components, depending, in part, upon the applicator that is to be used to dispense the fusing agent. Examples of other suitable fusing agent components include dispersant(s), silane coupling agent(s), co-solvent(s), humectant(s), surfactant(s), antimicrobial agent(s), anti-kogation agent(s), and/or chelating agent(s).

When energy absorber is an inorganic pigment (having absorption at wavelengths ranging from 800 nm to 4000 nm and transparency at wavelengths ranging from 400 nm to 780 nm), the FA vehicle may also include dispersant(s) and/or silane coupling agent(s).

The energy absorber (i.e., the inorganic pigment having absorption at wavelengths ranging from 800 nm to 4000 nm and transparency at wavelengths ranging from 400 nm to 780 nm) may, in some instances, be dispersed with a dispersant. As such, the dispersant helps to uniformly distribute the energy absorber throughout the fusing agent. Examples of suitable dispersants include polymer or small molecule dispersants, charged groups attached to the energy absorber surface, or other suitable dispersants. Some specific examples of suitable dispersants include a water-soluble acrylic acid polymer (e.g., CARBOSPERSE^{®} K7028 available from Lubrizol), water-soluble styrene-acrylic acid copolymers/resins (e.g., JONCRYL^{®} 296, JONCRYL^{®} 671, JONCRYL^{®} 678, JONCRYL^{®} 680, JONCRYL^{®} 683, JONCRYL^{®} 690, etc. available from BASF Corp.), a high molecular weight block copolymer with pigment affinic groups (e.g., DISPERBYK^{®}-190 available BYK Additives and Instruments), or water-soluble styrene-maleic anhydride copolymers/resins.

Whether a single dispersant is used or a combination of dispersants is used, the total amount of dispersant(s) in the fusing agent may range from about 10 wt% to about 200 wt% based on the weight of the energy absorber in the fusing agent.

A silane coupling agent may also be added to the fusing agent to help bond the organic and inorganic materials. Examples of suitable silane coupling agents include the SILQUESTO A series manufactured by Momentive.

Whether a single silane coupling agent is used or a combination of silane coupling agents is used, the total amount of silane coupling agent(s) in the fusing agent may range from about 0.1 wt% active to about 50 wt% active based on the weight of the energy absorber in the fusing agent. In an example, the total amount of silane coupling agent(s) in the fusing agent ranges from about 1 wt% active to about 30 wt% active based on the weight of the energy absorber. In another example, the total amount of silane coupling agent(s) in the fusing agent ranges from about 2.5 wt% active to about 25 wt% active based on the weight of the energy absorber.

Classes of organic co-solvents that may be used in a water-based fusing agent include aliphatic alcohols, aromatic alcohols, diols, glycol ethers, polyglycol ethers, lactams, formamides, acetamides, glycols, and long chain alcohols. Examples of these co-solvents include primary aliphatic alcohols, secondary aliphatic alcohols, 1,2-alcohols, 1,3-alcohols, 1,5-alcohols, 1,6-hexanediol or other diols (e.g., 1,5-pentanediol, 2-methyl-1,3-propanediol, etc.), ethylene glycol alkyl ethers, propylene glycol alkyl ethers, higher homologs (C₆-C₁₂) of polyethylene glycol alkyl ethers, triethylene glycol, tetraethylene glycol, tripropylene glycol methyl ether, N-alkyl caprolactams, unsubstituted caprolactams, 2-pyrrolidone, 1-methyl-2-pyrrolidone, N-(2-hydroxyethyl)-2-pyrrolidone, both substituted and unsubstituted formamides, both substituted and unsubstituted acetamides, and the like. Other examples of organic co-solvents include dimethyl sulfoxide (DMSO), isopropyl alcohol, ethanol, pentanol, acetone, or the like.

Some examples of suitable co-solvents include water-soluble high-boiling point solvents, which have a boiling point of at least 120°C, or higher. Some examples of high-boiling point solvents include 2-pyrrolidone (i.e., 2-pyrrolidinone, boiling point of about 245°C), 1-methyl-2-pyrrolidone (boiling point of about 203°C), N-(2-hydroxyethyl)-2-pyrrolidone (boiling point of about 140°C), 2-methyl-1,3-propanediol (boiling point of about 212°C), and combinations thereof.

The co-solvent(s) may be present in the fusing agent in a total amount ranging from about 1 wt% to about 50 wt% based upon the total weight of the fusing agent, depending upon the jetting architecture of the applicator. In an example, the total amount of the co-solvent(s) present in the fusing agent is 25 wt% based on the total weight of the fusing agent.

The co-solvent(s) of the fusing agent may depend, in part, upon the jetting technology that is to be used to dispense the fusing agent. For example, if thermal inkjet printheads are to be used, water and/or ethanol and/or other longer chain alcohols (e.g., pentanol) may be the solvent (i.e., makes up 35 wt% or more of the fusing agent) or co-solvents. For another example, if piezoelectric inkjet printheads are to be used, water may make up from about 25 wt% to about 30 wt% of the fusing agent, and the solvent (i.e., 35 wt% or more of the fusing agent) may be ethanol, isopropanol, acetone, etc. The co-solvent(s) of the fusing agent may also depend, in part, upon the build material composition that is being used with the fusing agent. For a hydrophobic powder (such as the polyamides disclosed herein), the FA vehicle may include a higher solvent content in order to improve the flow of the fusing agent into the build material composition.

The FA vehicle may also include humectant(s). In an example, the total amount of the humectant(s) present in the fusing agent ranges from about 3 wt% active to about 10 wt% active, based on the total weight of the fusing agent. An example of a suitable humectant is ethoxylated glycerin having the following formula: 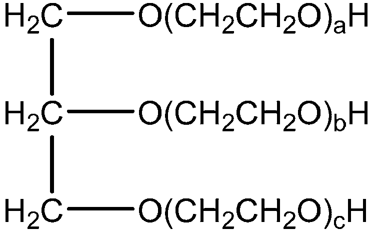 in which the total of a+b+c ranges from about 5 to about 60, or in other examples, from about 20 to about 30. An example of the ethoxylated glycerin is LIPONIC^{®} EG-1 (LEG-1, glycereth-26, a+b+c=26, available from Lipo Chemicals).

In some examples, the FA vehicle includes surfactant(s) to improve the jettability of the fusing agent. Examples of suitable surfactants include a self-emulsifiable, non-ionic wetting agent based on acetylenic diol chemistry (e.g., SURFYNOL^{®} SEF from Evonik Degussa), a non-ionic fluorosurfactant (e.g., CAPSTONE^{®} fluorosurfactants, such as CAPSTONE^{®} FS-35, from Chemours), and combinations thereof. In other examples, the surfactant is an ethoxylated low-foam wetting agent (e.g., SURFYNOL^{®} 440 or SURFYNOL^{®} CT-111 from Evonik Degussa) or an ethoxylated wetting agent and molecular defoamer (e.g., SURFYNOL^{®} 420 from Evonik Degussa). Still other suitable surfactants include non-ionic wetting agents and molecular defoamers (e.g., SURFYNOL^{®} 104E from Evonik Degussa) or water-soluble, non-ionic surfactants (e.g., TERGITOL^{™} TMN-6, TERGITOL^{™} 15-S-7, or TERGITOL^{™} 15-S-9 (a secondary alcohol ethoxylate) from The Dow Chemical Company or TEGO^{®} Wet 510 (polyether siloxane) available from Evonik Degussa). Yet another suitable surfactant includes alkyldiphenyloxide disulfonate (e.g., the DOWFAX^{™} series, such a 2A1, 3B2, 8390, C6L, C10L, and 30599, from The Dow Chemical Company).

Whether a single surfactant is used or a combination of surfactants is used, the total amount of surfactant(s) in the fusing agent may range from about 0.01 wt% active to about 10 wt% active based on the total weight of the fusing agent. In an example, the total amount of surfactant(s) in the fusing agent may be about 3 wt% active based on the total weight of the fusing agent.

An anti-kogation agent may be included in the fusing agent that is to be jetted using thermal inkjet printing. Kogation refers to the deposit of dried printing liquid (e.g., fusing agent) on a heating element of a thermal inkjet printhead. Anti-kogation agent(s) is/are included to assist in preventing the buildup of kogation. Examples of suitable anti-kogation agents include oleth-3-phosphate (e.g., commercially available as CRODAFOS^{®} O3A or CRODAFOS^{®} N-3 acid from Croda), dextran 500k, CRODAFOS^{™} HCE (phosphate-ester from Croda Int.), CRODAFOS^{®} N10 (oleth-10-phosphate from Croda Int.), DISPERSOGEN^{®} LFH (polymeric dispersing agent with aromatic anchoring groups, acid form, anionic, from Clariant), or a combination of oleth-3-phosphate and a low molecular weight (e.g., < 5,000) acrylic acid polymer (e.g., commercially available as CARBOSPERSE^{™} K-7028 Polyacrylate from Lubrizol).

Whether a single anti-kogation agent is used or a combination of anti-kogation agents is used, the total amount of anti-kogation agent(s) in the fusing agent may range from greater than 0.10 wt% active to about 1.5 wt% active based on the total weight of the fusing agent. In an example, the oleth-3-phosphate is included in an amount ranging from about 0.20 wt% active to about 0.60 wt% active, and the low molecular weight polyacrylic acid polymer is included in an amount ranging from about 0.005 wt% active to about 0.03 wt% active.

The FA vehicle may also include antimicrobial agent(s). Suitable antimicrobial agents include biocides and fungicides. Example antimicrobial agents may include the NUOSEPT^{™} (Troy Corp.), UCARCIDE^{™} (The Dow Chemical Company), ACTICIDE^{®} B20 (Thor Chemicals), ACTICIDE^{®} M20 (Thor Chemicals), ACTICIDE^{®} MBL (blends of 2-methyl-4-isothiazolin-3-one (MIT), 1,2-benzisothiazolin-3-one (BIT) and Bronopol) (Thor Chemicals), AXIDE^{™} (Planet Chemical), NIPACIDE^{™} (Clariant), blends of 5-chloro-2-methyl-4-isothiazolin-3-one (CIT or CMIT) and MIT under the tradename KATHON^{™} (The Dow Chemical Company), and combinations thereof. Examples of suitable biocides include an aqueous solution of 1,2-benzisothiazolin-3-one (e.g., PROXEL^{®} GXL from Arch Chemicals, Inc.), quaternary ammonium compounds (e.g., BARDAC^{®} 2250 and 2280, BARQUAT^{®} 50-65B, and CARBOQUAT^{®} 250-T, all from Lonza Ltd. Corp.), and an aqueous solution of methylisothiazolone (e.g., KORDEK^{®} MLX from The Dow Chemical Company).

In an example, the fusing agent may include a total amount of antimicrobial agents that ranges from about 0.0001 wt% active to about 1 wt% active. In an example, the antimicrobial agent(s) is/are a biocide(s) and is/are present in the fusing agent in an amount of about 0.25 wt% active (based on the total weight of the fusing agent).

Chelating agents (or sequestering agents) may be included in the FA vehicle to eliminate the deleterious effects of heavy metal impurities. Examples of chelating agents include disodium ethylenediaminetetraacetic acid (EDTA-Na), ethylene diamine tetra acetic acid (EDTA), and methylglycinediacetic acid (e.g., TRILON^{®} M from BASF Corp.).

Whether a single chelating agent is used or a combination of chelating agents is used, the total amount of chelating agent(s) in the fusing agent may range from greater than 0 wt% active to about 2 wt% active based on the total weight of the fusing agent. In an example, the chelating agent(s) is/are present in the fusing agent in an amount of about 0.04 wt% active (based on the total weight of the fusing agent).

### Detailing Agents

In some examples of the 3D printing kit and/or composition and the 3D printing method disclosed herein, a detailing agent may be used. The detailing agent may include a surfactant, a co-solvent, and a balance of water. In some examples, the detailing agent consists of these components, and no other components. In some other examples, the detailing agent may further include a colorant. In still some other examples, detailing agent consists of a colorant, a surfactant, a co-solvent, and a balance of water, with no other components. In yet some other examples, the detailing agent may further include additional components, such as anti-kogation agent(s), antimicrobial agent(s), and/or chelating agent(s) (each of which is described above in reference to the fusing agent).

The surfactant(s) that may be used in the detailing agent include any of the surfactants listed above in reference to the fusing agent. The total amount of surfactant(s) in the detailing agent may range from about 0.10 wt% to about 5.00 wt% with respect to the total weight of the detailing agent.

The co-solvent(s) that may be used in the detailing agent include any of the co-solvents listed above in reference to the fusing agent. The total amount of co-solvent(s) in the detailing agent may range from about 1.00 wt% to about 20.00 wt% with respect to the total weight of the detailing agent.

In some examples, the detailing agent does not include a colorant. In these examples, the detailing agent may be colorless. As used herein, "colorless," means that the detailing agent is achromatic and does not include a colorant.

When the detailing agent includes the colorant, the colorant may be a dye of any color having substantially no absorbance in a range of 650 nm to 2500 nm. By "substantially no absorbance" it is meant that the dye absorbs no radiation having wavelengths in a range of 650 nm to 2500 nm, or that the dye absorbs less than 10% of radiation having wavelengths in a range of 650 nm to 2500 nm. The dye is also capable of absorbing radiation with wavelengths of 650 nm or less. As such, the dye absorbs at least some wavelengths within the visible spectrum, but absorbs little or no wavelengths within the near-infrared spectrum. This is in contrast to the active material in the fusing agent, which absorbs wavelengths within the near-infrared spectrum. As such, the colorant in the detailing agent will not substantially absorb the fusing radiation, and thus will not initiate melting and fusing of the build material composition in contact therewith when the build material layer is exposed to the fusing radiation.

The dye in the detailing agent may be selected so that its color matches the color of the active material in the fusing agent. As examples, the dye may be any azo dye having sodium or potassium counter ion(s) or any diazo (i.e., double azo) dye having sodium or potassium counter ion(s), where the color of azo or dye azo dye matches the color of the fusing agent.

In an example, the dye is a black dye. Some examples of the black dye include azo dyes having sodium or potassium counter ion(s) and diazo (i.e., double azo) dyes having sodium or potassium counter ion(s). Examples of azo and diazo dyes may include tetrasodium (6Z)-4-acetamido-5-oxo-6-[[7-sulfonato-4-(4-sulfonatophenyl)azo-1-naphthyl]hydrazono]naphthalene-1,7-disulfonate with a chemical structure of: 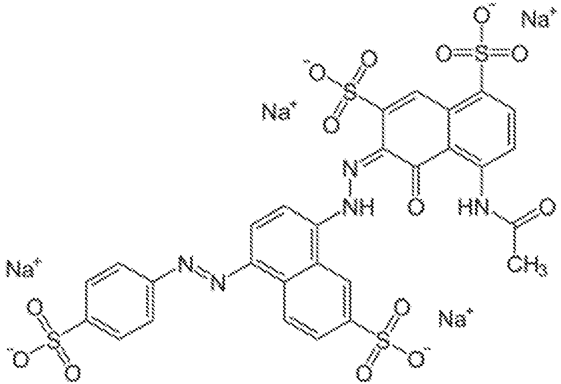 (commercially available as Food Black 1); tetrasodium 6-amino-4-hydroxy-3-[[7-sulfonato-4-[(4-sulfonatophenyl)azo]-1-naphthyl]azo]naphthalene-2,7-disulfonate with a chemical structure of: 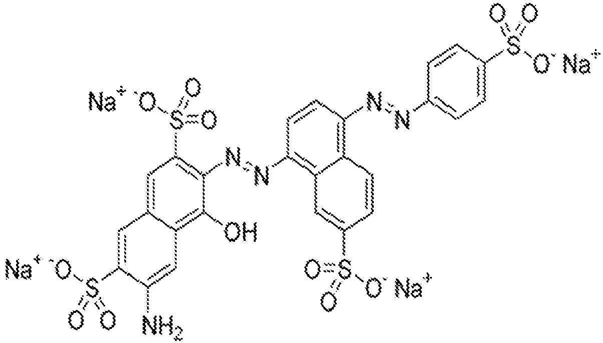 (commercially available as Food Black 2); tetrasodium (6E)-4-amino-5-oxo-3-[[4-(2-sulfonatooxyethylsulfonyl)phenyl]diazenyl]-6-[[4-(2-sulfonatooxyethylsulfonyl)phenyl]hydrazinylidene]naphthalene-2,7-disulfonate with a chemical structure of: 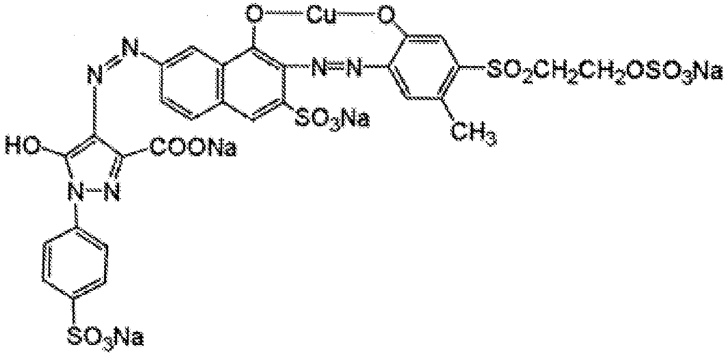 (commercially available as Reactive Black 31); tetrasodium (6E)-4-amino-5-oxo-3-[[4-(2-sulfonatooxyethylsulfonyl)phenyl]diazenyl]-6-[[4-(2-sulfonatooxyethylsulfonyl)phenyl]hydrazinylidene]naphthalene-2,7-disulfonate with a chemical structure of: 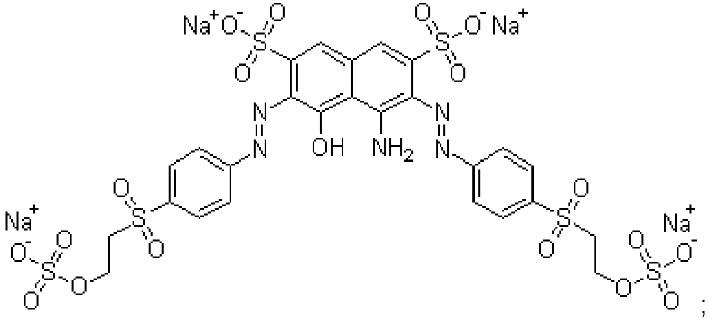 and combinations thereof. Some other commercially available examples of the dye used in the detailing agent include multipurpose black azo-dye based liquids, such as PRO-JET^{®} Fast Black 1 (made available by Fujifilm Holdings), and black azo-dye based liquids with enhanced water fastness, such as PRO-JET^{®} Fast Black 2 (made available by Fujifilm Holdings).

In some instances, in addition to the black dye, the colorant in the detailing agent may further include another dye. In an example, the other dye may be a cyan dye that is used in combination with any of the dyes disclosed herein. The other dye may also have substantially no absorbance above 650 nm. The other dye may be any colored dye that contributes to improving the hue and color uniformity of the final 3D part.

Some examples of the other dye include a salt, such as a sodium salt, an ammonium salt, or a potassium salt. Some specific examples include ethyl-[4-[[4-[ethyl-[(3-sulfophenyl) methyl] amino] phenyl]-(2-sulfophenyl) ethylidene]-1-cyclohexa-2,5-dienylidene]-[(3-sulfophenyl) methyl] azanium with a chemical structure of: 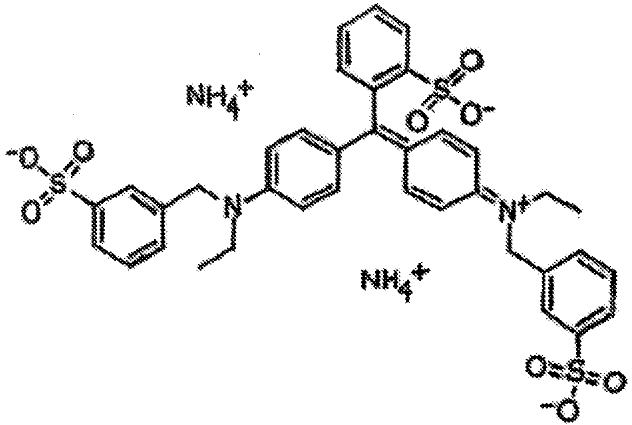 (commercially available as Acid Blue 9, where the counter ion may alternatively be sodium counter ions or potassium counter ions); sodium 4-[(E)-{4-[benzyl(ethyl)amino]phenyl}{(4E)-4-[benzyl(ethyl)iminio]cyclohexa-2,5-dien-1-ylidene}methyl]benzene-1,3-disulfonate with a chemical structure of: 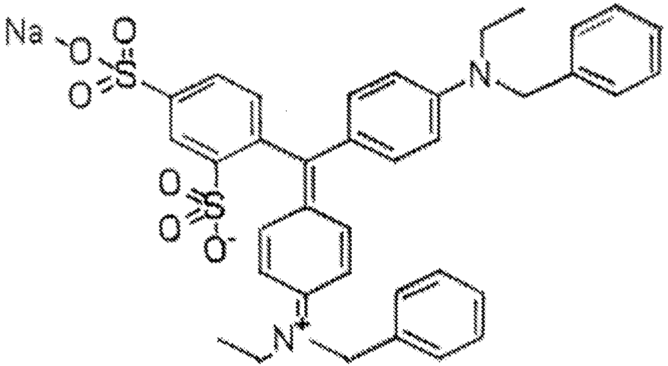 (commercially available as Acid Blue 7); and a phthalocyanine with a chemical structure of: 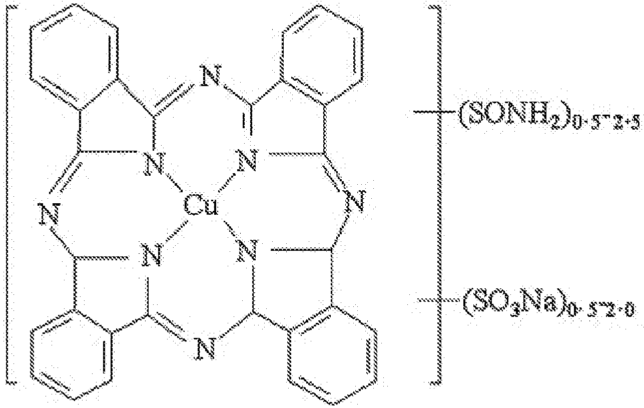 (commercially available as Direct Blue 199); and combinations thereof.

In an example of the detailing agent, the dye may be present in an amount ranging from about 1.00 wt% to about 3.00 wt% based on the total weight of the detailing agent. In another example of the detailing agent including a combination of dyes, one dye (e.g., the black dye) is present in an amount ranging from about 1.50 wt% to about 1.75 wt% based on the total weight of the detailing agent, and the other dye (e.g., the cyan dye) is present in an amount ranging from about 0.25 wt% to about 0.50 wt% based on the total weight of the detailing agent.

The balance of the detailing agent is water. As such, the amount of water may vary depending upon the amounts of the other components that are included.

### Printing Methods and Methods of Use

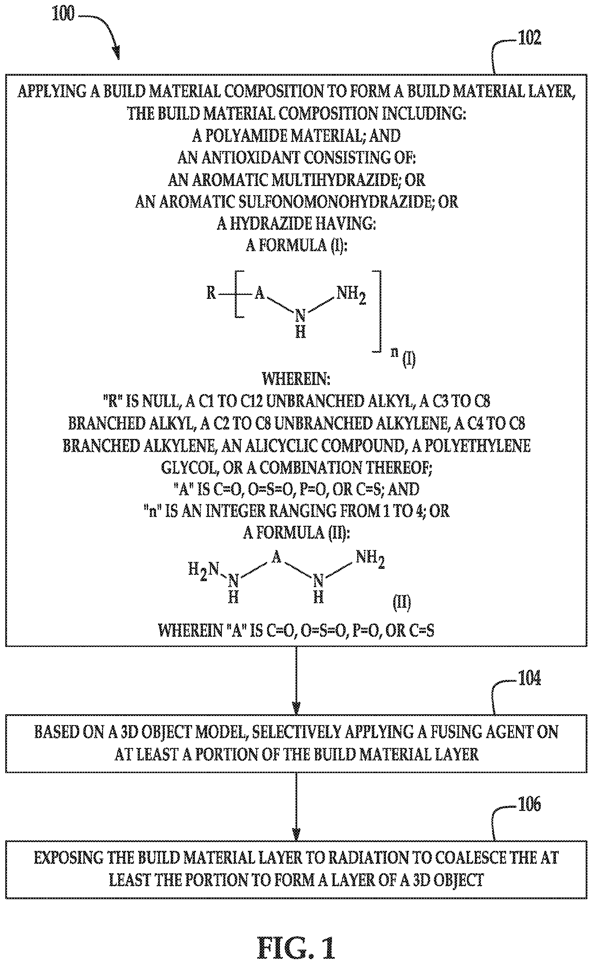

Referring now to Fig. 1, an example of a method 100 for 3D printing is depicted. The examples of the method 100 may use an example of the build material composition and/or an example of the 3D printing kit and/or composition disclosed herein.

As shown in Fig. 1, the method 100 for three-dimensional (3D) printing comprises: applying a build material composition to form a build material layer, the build material composition including: a polyamide material; and an antioxidant consisting of: an aromatic multihydrazide; or an aromatic sulfonomonohydrazide; or a hydrazide having: a formula (I): 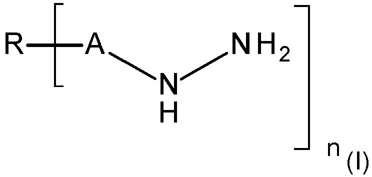 wherein: R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof; A is C=O, O=S=O, P=O, or C=S; and n is an integer ranging from 1 to 4; or a formula (II): 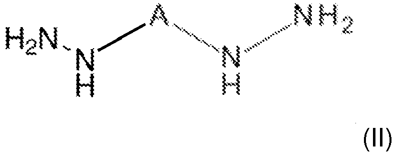 wherein A is C=O, O=S=O, P=O, or C=S (reference numeral 102); based on a 3D object model, selectively applying a fusing agent on at least a portion of the build material layer (reference numeral 104); and exposing the build material layer to radiation to coalesce the at least the portion to form a layer of a 3D object (reference numeral 106).

While not shown, the method 100 may include forming the build material composition. In an example, the build material composition is formed prior to applying the build material composition to form the build material layer. The build material composition may be formed by mixing (e.g., dry blending) the polyamide material with the antioxidant. In an example, build material composition may be formed by mixing (e.g., dry blending) the polyamide material, the antioxidant, and an additive selected from the group consisting of the filler, the whitener, the antistatic agent, the flow aid, or a combination thereof.

Furthermore, prior to execution of the method 100, it is to be understood that a controller may access data stored in a data store pertaining to a 3D object that is to be printed. For example, the controller may determine the number of layers of the build material composition that are to be formed, the locations at which any of the agents is/are to be deposited on each of the respective layers, etc.

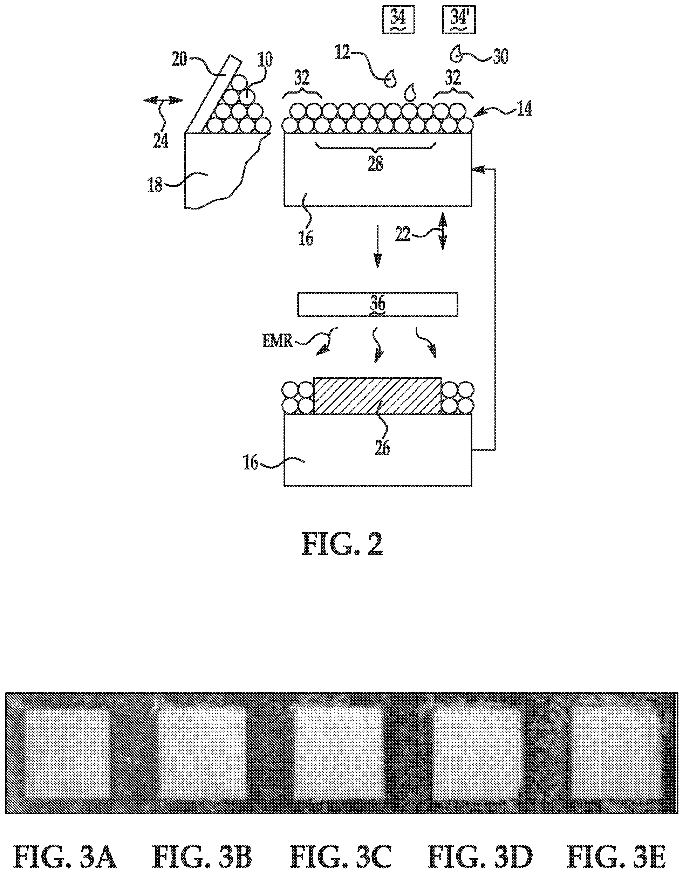

Referring now to Fig. 2, an example of the method 100, which utilizes the build material composition 10 (including the polyamide material and the antioxidant) and the fusing agent 12, is graphically depicted.

In Fig. 2, a layer 14 of the build material composition 10 is applied on a build area platform 16. A printing system may be used to apply the build material composition 10. The printing system may include the build area platform 16, a build material supply 18 containing the build material composition 10, and a build material distributor 20.

The build area platform 16 receives the build material composition 10 from the build material supply 18. The build area platform 16 may be moved in the directions as denoted by the arrow 22, e.g., along the z-axis, so that the build material composition 10 may be delivered to the build area platform 16 or to a previously formed layer. In an example, when the build material composition 10 is to be delivered, the build area platform 16 may be programmed to advance (e.g., downward) enough so that the build material distributor 20 can push the build material composition 10 onto the build area platform 16 to form a substantially uniform layer of the build material composition 10 thereon. The build area platform 16 may also be returned to its original position, for example, when a new part is to be built.

The build material supply 18 may be a container, bed, or other surface that is to position the build material composition 10 between the build material distributor 20 and the build area platform 16. The build material supply 18 may include heaters so that the build material composition 10 is heated to a supply temperature ranging from about 25°C to about 150°C. In these examples, the supply temperature may depend, in part, on the build material composition 10 used and/or the 3D printer used. As such, the range provided is one example, and higher or lower temperatures may be used.

The build material distributor 20 may be moved in the directions as denoted by the arrow 24, e.g., along the y-axis, over the build material supply 18 and across the build area platform 16 to spread the layer 14 of the build material composition 10 over the build area platform 16. The build material distributor 20 may also be returned to a position adjacent to the build material supply 18 following the spreading of the build material composition 10. The build material distributor 20 may be a blade (e.g., a doctor blade), a roller, a combination of a roller and a blade, and/or any other device capable of spreading the build material composition 10 over the build area platform 16. For instance, the build material distributor 20 may be a counter-rotating roller. In some examples, the build material supply 18 or a portion of the build material supply 18 may translate along with the build material distributor 20 such that build material composition 10 is delivered continuously to the build material distributor 20 rather than being supplied from a single location at the side of the printing system as depicted in Fig. 2.

The build material supply 18 may supply the build material composition 10 into a position so that it is ready to be spread onto the build area platform 16. The build material distributor 20 may spread the supplied build material composition 10 onto the build area platform 16. The controller (not shown) may process "control build material supply" data, and in response, control the build material supply 18 to appropriately position the particles of the build material composition 10, and may process "control spreader" data, and in response, control the build material distributor 20 to spread the build material composition 10 over the build area platform 16 to form the layer 14 of the build material composition 10 thereon. In Fig. 2, one build material layer 14 has been formed.

The layer 14 has a substantially uniform thickness across the build area platform 16. In an example, the build material layer 14 has a thickness ranging from about 50 µm to about 120 µm. In another example, the thickness of the build material layer 14 ranges from about 30 µm to about 300 µm. It is to be understood that thinner or thicker layers may also be used. For example, the thickness of the build material layer 14 may range from about 20 µm to about 500 µm. The layer thickness may be about 2x (i.e., 2 times) the average diameter of the build material composition particles at a minimum for finer part definition. In some examples, the layer 14 thickness may be about 1.2x the average diameter of the build material composition particles.

After the build material composition 10 has been applied, and prior to further processing, the build material layer 14 may be exposed to pre-heating. In an example, the pre-heating temperature may be below the melting point of the polyamide material of the build material composition 10. As examples, the pre-heating temperature may range from about 5°C to about 50°C below the melting point of the polyamide material. In an example, the pre-heating temperature ranges from about 50°C to about 205°C. In still another example, the pre-heating temperature ranges from about 100°C to about 190°C. The low pre-heating temperature may enable the non-patterned build material composition 10 to be easily removed from the 3D object after completion of the 3D object. In these examples, the pre-heating temperature may depend, in part, on the build material composition 10 used. As such, the ranges provided are some examples, and higher or lower temperatures may be used.

Pre-heating the layer 14 may be accomplished by using any suitable heat source that exposes all of the build material composition 10 in the layer 14 to the heat. Examples of the heat source include a thermal heat source (e.g., a heater (not shown) integrated into the build area platform 16 (which may include sidewalls)) or a radiation source 36.

After the layer 14 is formed, and in some instances is pre-heated, the fusing agents 12 is selectively applied on at least some of the build material composition 10 in the layer 14.

To form a layer 26 of a 3D object, at least a portion (e.g., portion 28) of the layer 14 of the build material composition 10 is patterned with the fusing agent 12. It is to be understood that a single fusing agent 12 may be selectively applied on the build material layer 14, or multiple fusing agents 12 may be selectively applied on the build material layer 14. The fusing agent(s) 12 that is/are applied on the build material layer 14 may depend, at least in part, on the color(s) desired for the object layer 26 and/or the mechanical properties desired for the object layer 26.

The volume of the fusing agent 12 that is applied per unit of the build material composition 10 in the patterned portion 28 may be sufficient to absorb and convert enough electromagnetic radiation so that the build material composition 10 in the patterned portion 28 will coalesce/fuse. The volume of the fusing agent 12 that is applied per unit of the build material composition 10 may depend, at least in part, on the energy absorber used, the energy absorber loading in the fusing agent 12, and the build material composition 10 used.

The portion(s) 32 are not patterned with the fusing agent 12 and thus are not to become part of the final 3D object layer 26. In one example of the method 100, no agents are applied on the portion(s) 32.

In the example of the method 100 shown in Fig. 2, the detailing agent 30 is selectively applied to the portion(s) 32 of the layer 14. The detailing agent 30 may provide an evaporative cooling effect to the build material composition 10 to which it is applied. The evaporative cooling effect of the detailing agent 30 may be used to aid in preventing the build material composition 10 in the portion(s) 32 from coalescing/fusing. The evaporative cooling provided by the detailing agent 30 may remove energy from the portion(s) 32, which may lower the temperature of the build material composition 10 in the portion(s) 32 and prevent the build material composition 10 in the portion(s) 32 from coalescing/fusing.

In examples of the method 100, any of the agents 12, 30 may be dispensed from an applicator 34, 34'. The applicator(s) 34, 34' may each be a thermal inkjet printhead, a piezoelectric printhead, a continuous inkjet printhead, etc., and the selective application of the agent(s) 12, 30 may be accomplished by thermal inkjet printing, piezo electric inkjet printing, continuous inkjet printing, etc. The controller may process data, and in response, control the applicator(s) 34, 34' to deposit the agent(s) 12, 30 onto predetermined portion(s) 28, 32 of the build material composition 10. It is to be understood that the applicators 34, 34' may be separate applicators or a single applicator with several individual cartridges for dispensing the respective agents 12, 30.

It is to be understood that the selective application of the agent(s) 12, 30 may be accomplished in a single printing pass or in multiple printing passes. In some examples, the agent(s) 12, is/are selectively applied in a single printing pass. In some other examples, the agent(s) 12, 30 is/are selectively applied in multiple printing passes. In one of these examples, the number of printing passes ranging from 2 to 4. It may be desirable to apply the agent(s) 12, 30 in multiple printing passes to increase the amount, e.g., of the energy absorber, detailing agent, etc. that is applied to the build material composition 10, to avoid liquid splashing, to avoid displacement of the build material composition 10, etc.

After the agent(s) 12, 30 is/are selectively applied in the specific portion(s) 28, 32 of the layer 14, the entire layer 14 of the build material composition 10 is exposed to electromagnetic radiation (shown as EMR in Fig. 2).

The electromagnetic radiation is emitted from the radiation source 36. The length of time the electromagnetic radiation is applied for, or energy exposure time, may be dependent, for example, on one or more of: characteristics of the radiation source 36; characteristics of the build material composition 10; and/or characteristics of the fusing agent 12.

It is to be understood that the electromagnetic radiation exposure may be accomplished in a single radiation event or in multiple radiation events. In an example, the exposing of the build material composition 10 is accomplished in multiple radiation events. In a specific example, the number of radiation events ranges from 3 to 8. It may be desirable to expose the build material composition 10 to electromagnetic radiation in multiple radiation events to counteract a cooling effect that may be brought on by the amount of the fusing agent 12 that is applied to the build material layer 14. Additionally, it may be desirable to expose the build material composition 10 to electromagnetic radiation in multiple radiation events to sufficiently elevate the temperature of the build material composition 10 in the portion(s) 28, without over heating the build material composition 10 in the portion(s) 32.

The fusing agent 12 enhances the absorption of the radiation, converts the absorbed radiation to thermal energy, and promotes the transfer of the thermal heat to the build material composition 10 in contact therewith. In an example, the fusing agent 12 sufficiently elevates the temperature of the build material composition 10 in the portion 28 to a temperature above the melting point of the polyamide material, allowing coalescing/fusing of the build material composition 10 to take place. The application of the electromagnetic radiation forms the 3D object layer 26.

In some examples, the electromagnetic radiation has a wavelength ranging from 800 nm to 4000 nm, or from 800 nm to 1400 nm, or from 800 nm to 1200 nm. Radiation having wavelengths within the provided ranges may be absorbed (e.g., 80% or more of the applied radiation is absorbed) by the fusing agent 12 and may heat the build material composition 10 in contact therewith, and may not be substantially absorbed (e.g., 25% or less of the applied radiation is absorbed) by the build material composition 10 in portion(s) 32.

After the 3D object layer 26 is formed, additional layer(s) may be formed thereon to create an example of the 3D object. To form the next layer, additional build material composition 10 may be applied on the layer 26. The fusing agent 12 is then selectively applied on at least a portion of the additional build material composition 10, according to the 3D object model. The detailing agent 30 may be applied in any area of the additional build material composition 10 where coalescence is not desirable. After the agent(s) 12, 30 is/are applied, the entire layer of the additional build material composition 10 is exposed to electromagnetic radiation in the manner described herein. The application of additional build material composition 10, the selective application of the agent(s) 12, 30 and the electromagnetic radiation exposure may be repeated a predetermined number of cycles to form the final 3D object in accordance with the 3D object model.

The build material composition 10 that does not become part of the 3D object (e.g., the build material composition in portion(s) 32) may be reclaimed to be reused as build material in the printing of another 3D object. The antioxidant may reduce the thermal degradation and improve the stability of the polyamide material in the build material composition 10 that does not become part of the 3D object. As such, the discoloration and the reusability/recyclability of this polyamide material may be improved. In some examples, the reusability/recyclability the of the build material composition 10 that does not become part of the 3D object may depend, in part, on the environment in which the method 100 is accomplished.

In some examples, the method 100 may be accomplished in an air environment. As used herein, an "air environment" or an "environment containing air" refers to an environment that contains 20 vol% or more of oxygen. When the method 100 is accomplished in an air environment, the build material composition 10 may be reused/recycled at a weight ratio of recycled build material composition to fresh build material composition ranging from 90:10 to 40:60. In another example, the build material composition 10 may be reused/recycled at a weight ratio of recycled build material composition to fresh build material composition ranging from 80:20 to 50:50.

In other examples, the method 100 may be accomplished in an environment containing less than 20 vol% of oxygen. As examples, the method 100 may be accomplished in an environment containing 10 vol% or less of oxygen, in an environment containing 4 vol% or less of oxygen, or in an environment containing 2 vol% or less of oxygen. When the method 100 is accomplished in an environment containing 4 vol% or less of oxygen, the build material composition 10 may be reused/recycled at a weight ratio of recycled build material composition to fresh build material composition ranging from 90:10 to 40:60, or from 80:20 to 50:50.

In some examples, the method 100 may further include, upon completion of the 3D object, heating the 3D object at a temperature ranging from about 165°C to about 190°C for a time period ranging from greater than 0 hours to about 100 hours. In some examples, the 3D object is heated at a temperature of about 165°C, or at a temperature of about 175°C. In other examples, the 3D object is heated for about 40 hours, or about 72 hours, or about 96 hours. Heating may be accomplished by any suitable means. For example, the 3D object may be heated in an oven. Heating the 3D object after its formation may increase the ultimate tensile strength and/or the Young's modulus of the 3D object (as compared to the ultimate tensile strength and/or the Young's modulus of a 3D object that was allowed to cool in a room temperature environment upon completion of the 3D object). In these examples, it is believed that that the antioxidant may prevent the degradation of the 3D object during heating.

To further illustrate the present disclosure, examples are given herein. It is to be understood that these examples are provided for illustrative purposes and are not to be construed as limiting the scope of the present disclosure.

### EXAMPLES

### Example 1

In this example, a comparative build material composition was compared with several different example build material compositions. The polyamide in each of the compositions was a polyamide 12, specifically ORGASOL^{®} 2002 ES6 NAT from Arkema. This particular polyamide 12 contained little to no polymer stabilization additives.

The "as is" ORGASOL^{®} 2002 ES6 NAT material was used as the comparative build material composition (Comp. Ex. A). As such, no antioxidant was added to the material received from the manufacturer.

For the nine example build material compositions, various dihydrazide derivatives were directly added to the "as is" ORGASOL^{®} 2002 ES6 NAT material at a loading of 1 wt% (based on the total build material composition). Table 6 illustrates the compositions, including which dihydrazide was used in the different examples. The resulting mixtures were thoroughly dry blended using a Resodyn acoustic mixer to help ensure the highest degree of homogeneity.

**TABLE 6**

| **Sample ID** | **Polyamide** | **Dihydrazide** |
|---|---|---|
| Comp. Ex. A | 100 wt% | None |
| | ORGASOL^{®} 2002 | |
| | ES6 NAT | |
| Ex. 1 | | 1 wt% adipic acid dihydrazide |
| Ex. 2 | | 1 wt% carbohydrazide |
| Ex. 3 | | 1 wt% terephthalic dihydrazide |
| Ex. 4 | 99 wt% | 1 wt% oxalyl dihydrazide |
| Ex. 5 | ORGASOL^{®} 2002 | 1 wt% isophthalic dihydrazide |
| Ex. 6 | ES6 NAT | 1 wt% succinic dihydrazide |
| Ex. 7 | | 1 wt% dodecanedioic dihydrazide |
| Ex. 8 | | 1 wt% sebacic dihydrazide |
| Ex. 9 | | 1 wt% azelaic dihydrazide |

The dry blended mixtures were then aged in an oven for 20 hours at a temperature of 175°C. Following aging, any changes in powder color were documented using photographs (not shown) and colorimetric techniques. Regarding the colorimetric techniques, the L* (i.e., lightness) value and the b* (i.e., blue-yellow) value of the comparative and example build material compositions after being exposed to heating were compared. Each sample was measured three times, and the average results are shown in Table 7.

**TABLE 7**

| **Sample ID** | **L*** | **b*** |
|---|---|---|
| Comp. Ex. | 66.02 | 28.49 |
| Ex. 1 | 92.43 | 5.44 |
| Ex. 2 | 91.15 | 7.98 |
| Ex. 3 | 84.36 | 22.36 |
| Ex. 4 | 86.36 | 11.58 |
| Ex. 5 | 86.36 | 11.58 |
| Ex. 6 | 84.82 | 17.23 |
| Ex. 7 | 90.78 | 3.73 |
| Ex. 8 | 87.97 | 3.87 |
| Ex. 9 | 98.99 | 4.19 |

The L* value is indicative of the degree of whiteness, and thus a higher value indicates less discoloration. The b* value is indicative of yellowing, and thus a higher value indicates more discoloration. These results show that all of the examples (1-9) performed better than the comparative example in terms of discoloration. Ex. 1, 2, 7, 8, and 9 exhibited approximately 3-7 fold decrease in yellow (b*) relative to Comp. Ex. A.

The relative solution viscosity (RV, at ambient temperature) of Ex. 1 and Comp. Ex. A was also measured after the aging process, in accordance with the process described herein. The raw data and the calculated %change are shown in Table 8.

**TABLE 8**

| **Sample ID** | **Condition** | **RV** | **% Change** |
|---|---|---|---|
| Comp. Ex. A | Fresh | 1.601 | N/A |
| Comp. Ex. A | Aged 20 hrs @ 175°C | 1.309 | -18% |
| Ex. 1 | Aged 20 hrs @ 175°C | 1.566 | -2% |

The solution viscosity data for Ex. 1 showed a minimal change after aging, and thus the results support the colorimetric data.

### Example 2

In this example, a comparative build material composition was compared with several different example build material compositions. The polyamide in each of the compositions was a polyamide 12, specifically ORGASOL^{®} 2002 ES6 NAT from Arkema. This particular polyamide 12 contained little to no polymer stabilization additives.

The "as is" ORGASOL^{®} 2002 ES6 NAT material was used as the comparative build material composition (Comp. Ex. B). As such, no antioxidant was added to the material received from the manufacturer.

For the four example build material compositions, adipic acid dihydrazide was directly added to the "as is" ORGASOL^{®} 2002 ES6 NAT material at different loadings. Table 9 illustrates the compositions. The resulting mixtures were thoroughly dry blended using a Resodyn acoustic mixer to help ensure the highest degree of homogeneity.

**TABLE 9**

| **Sample ID** | **Polyamide (wt%)** | **Adipic Acid Dihydrazide (wt%)** |
|---|---|---|
| Comp. Ex. B | 100 | None |
| Ex. 10 | 99.9 | 0.1 |
| Ex. 11 | 99.7 | 0.3 |
| Ex. 12 | 99.4 | 0.6 |
| Ex. 13 | 99 | 1.0 |

The dry blended mixtures were then aged in an oven for 20 hours at a temperature of 175°C. Following aging, any changes in powder color were documented using photographs (see Fig. 3A through Fig. 3E) and colorimetric techniques.

As shown in Figs. 3A through 3E, Comp. Ex. B was more discolored after the aging process than any of the examples (Ex. 10, 11, 12 and 13). Of the examples, those with an antioxidant loading between 0.3 wt% and 1.0 wt% were the best. These results indicate that the addition of the antioxidant improved the stability and minimized discoloration of the polyamide 12 build material including little or no other antioxidant.

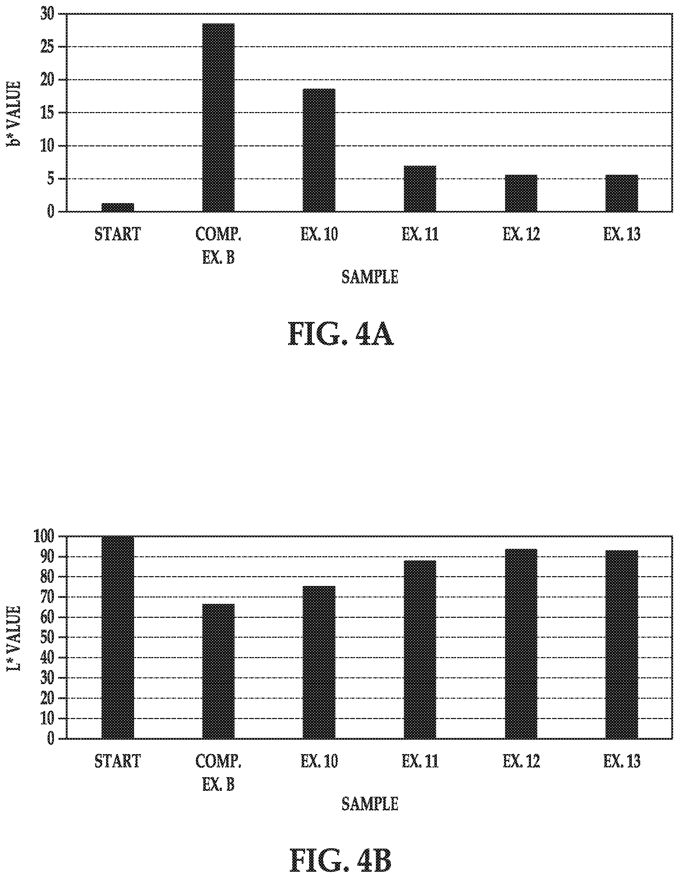

The b* (i.e., blue-yellow) value and the L* (i.e., lightness) value of the comparative and example build material compositions after being exposed to heating were compared. The b* values are shown in Fig. 4A and the L* values are shown in Fig. 4B. The "start" value is the b* and L* value of the Comp. Ex. B build material before aging. As illustrated in Fig. 4A, the b* value increased the most (relative to the start) for Comp. Ex. B (without the adipic acid dihydrazide), indicating that the antioxidant reduced the discoloration. Of the examples, those with an antioxidant loading between 0.3 wt% and 1.0 wt% had the best b* values after aging. As illustrated in Fig. 4B, the L* value decreased the most (relative to the start) for Comp. Ex. B (without the adipic acid dihydrazide), indicating that the antioxidant improved the retention of the degree of whiteness. Of the examples, those with an antioxidant loading between 0.3 wt% and 1.0 wt% had the best L* values after aging.

### Example 3

In this example, Comp. Ex. B and Ex. 11 build material compositions (from Example 2) were used to form several 3D objects. Each 3D object was formed by placing the respective build material compositions into aluminum trays and melting the compositions in an oven. The 3D objects were then cooled to room temperature.

Each of the example 3D objects (printed with Ex. 11 build material) was sufficiently melted/coalesced/fused. These results indicate that Ex. 11 build material will be a suitable build material composition for the 3D printing methods disclosed herein.

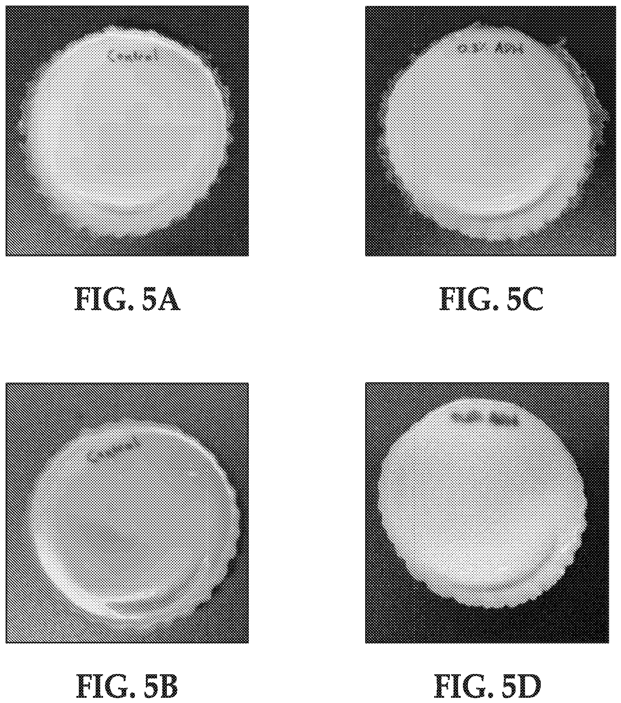

Fig. 5A and Fig. 5C illustrate (in black and white) the 3D objects formed using Comp. Ex. B and Ex. 11, respectively. The color of the parts indicated that the antioxidant has the ability to mitigate degradation in polyamide 12 that has undergone melting and recrystallization.

Each 3D object was subjected to an aging process after it was cooled. One example 3D object (formed with Ex. 11 build material) and one comparative 3D object (formed with Comp. Ex. 11) were aged for 20 hours at 175°C in an air environment. Fig. 5B and Fig. 5D illustrate (in black and white) the 3D objects formed using Comp. Ex. B and Ex. 11, respectively. The comparative 3D object formed with Comp. Ex. B was orange, and the example 3D object formed with Ex. 11 was only slightly yellowed. The discoloration of the example 3D object was significantly decreased relative to the comparative 3D object (with no antioxidant).

## Claims

1. A build material composition for three-dimensional (3D) printing, comprising:
a polyamide material; and
an antioxidant consisting of:
an aromatic multihydrazide; or
an aromatic sulfonomonohydrazide; or
a hydrazide having:
a formula (I): 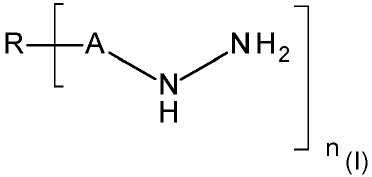 wherein:
R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof;
A is C=O, O=S=O, P=O, or C=S; and
n is an integer ranging from 1 to 4; or
a formula (II): 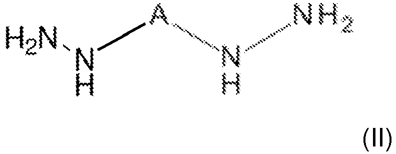 wherein A is C=O, O=S=O, P=O, or C=S.

2. The build material composition as defined in claim 1 wherein the antioxidant is the hydrazide having formula (I).

3. The build material composition as defined in claim 2 wherein A is O=S=O or P=O.

4. The build material composition as defined in claim 2 wherein the hydrazide is selected from the group consisting of adipic acid dihydrazide, oxalyl dihydrazide, succinic dihydrazide, azelaic dihydrazide, sebacic dihydrazide, dodecanedioic dihydrazide, and a combination thereof.

5. The build material composition as defined in claim 2 wherein A is C=O and n is 2.

6. The build material composition as defined in claim 1 wherein the antioxidant is the hydrazide having formula (II).

7. The build material composition as defined in claim 6 wherein A is O=S=O or P=O.

8. The build material composition as defined in claim 6 wherein the hydrazide is carbohydrazide.

9. The build material composition as defined in claim 1 wherein the antioxidant is present in the build material composition in an amount ranging from 0.05 wt % to 2 wt% based on a total weight of the build material composition

10. A kit for three-dimensional (3D) printing, comprising:
a build material composition including:
a polyamide material; and
an antioxidant consisting of:
an aromatic multihydrazide; or
an aromatic sulfonomonohydrazide; or
a hydrazide having:
a formula (I): 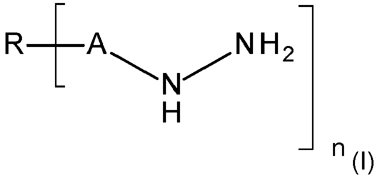 wherein:
R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof;
A is C=O, O=S=O, P=O, or C=S; and
n is an integer ranging from 1 to 4; or
a formula (II): 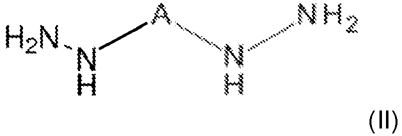 wherein A is C=O, O=S=O, P=O, or C=S; and
a fusing agent to be applied to at least a portion of the build material composition during 3D printing, the fusing agent including an energy absorber to absorb energy to melt or fuse the build material composition in the at least the portion.

11. The kit as defined in claim 10 wherein the antioxidant is the hydrazide having formula (I), and the antioxidant is present in the build material composition in an amount ranging from about 0.05 wt% to 2 wt % based on a total weight of the build material composition.

12. The kit as defined in claim 10 wherein the antioxidant is the hydrazide having formula (II), and the antioxidant is present in the build material composition in an amount ranging from 0.1 wt% to 1 wt%, based on a total weight of the build material composition.

13. The kit as defined in claim 10 wherein the antioxidant is:
the hydrazide having the formula (I), and wherein A is C=O and n is 2; or
the hydrazide having the formula (II), and wherein A is C=O.

14. A method for three-dimensional (3D) printing, comprising:
applying a build material composition to form a build material layer, the build material composition including:
a polyamide material; and
an antioxidant consisting of:
an aromatic multihydrazide; or
an aromatic sulfonomonohydrazide; or
a hydrazide having:
a formula (I): 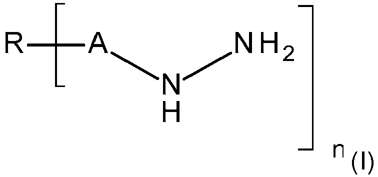 wherein:
R is null, a C1 to C12 unbranched alkyl, a C3 to C8 branched alkyl, a C2 to C8 unbranched alkylene, a C4 to C8 branched alkylene, an alicyclic compound, a polyethylene glycol, or a combination thereof;
A is C=O, O=S=O, P=O, or C=S; and
n is an integer ranging from 1 to 4; or
a formula (II): 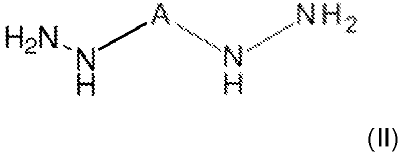 wherein A is C=O, O=S=O, P=O, or C=S;
based on a 3D object model, selectively applying a fusing agent on at least a portion of the build material layer; and
exposing the build material layer to radiation to coalesce the at least the portion to form a layer of a 3D object.

15. The method as defined in claim 14 wherein the antioxidant is:
the hydrazide having the formula (I), and wherein A is C=O and n is 2; or
the hydrazide having the formula (II), and wherein A is C=O.

## Patentansprüche

1. Baumaterialzusammensetzung zum dreidimensionalen Drucken (3D-Drucken), die Folgendes umfasst:
ein Polyamidmaterial; und
ein Antioxidationsmittel, bestehend aus den Folgenden:
einem aromatischen Multihydrazid; oder
einem aromatischen Sulfonomonohydrazid; oder
einem Hydrazid, das Folgendes aufweist:
eine Formel (I): 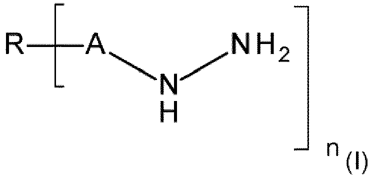 wobei:
R null, ein unverzweigtes C1- bis C12-Alkyl, ein verzweigtes C3- bis C8-Alkyl, ein unverzweigtes C2- bis C8-Alkylen, ein verzweigtes C4- bis C8-Alkylen, eine alicyclische Verbindung, ein Polyethylenglycol oder eine Kombination davon ist;
A C=O, O=S=O, P=O oder C=S ist; und
n eine ganze Zahl, die von 1 bis 4 reicht, ist; oder
eine Formel (II): 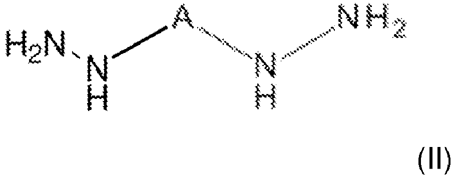 wobei A C=O, O=S=O, P=O oder C=S ist.

2. Baumaterialzusammensetzung nach Anspruch 1, wobei das Antioxidationsmittel das Hydrazid, das die Formel (I) aufweist, ist.

3. Baumaterialzusammensetzung nach Anspruch 2, wobei A O=S=O oder P=O ist.

4. Baumaterialzusammensetzung nach Anspruch 2, wobei das Hydrazid aus der Gruppe ausgewählt ist, bestehend aus Adipinsäuredihydrazid, Oxalyldihydrazid, Bernsteinsäuredihydrazid, Azelainsäuredihydrazid, Sebacinsäuredihydrazid, Dodecandisäuredihydrazid und einer Kombination davon.

5. Baumaterialzusammensetzung nach Anspruch 2, wobei A C=O ist und n 2 ist.

6. Baumaterialzusammensetzung nach Anspruch 1, wobei das Antioxidationsmittel das Hydrazid, das die Formel (II) aufweist, ist.

7. Baumaterialzusammensetzung nach Anspruch 6, wobei A O=S=O oder P=O ist.

8. Baumaterialzusammensetzung nach Anspruch 6, wobei das Hydrazid Carbohydrazid ist.

9. Baumaterialzusammensetzung nach Anspruch 1, wobei das Antioxidationsmittel in der Baumaterialzusammensetzung in einer Menge, die von 0,05 Gew.-% bis 2 Gew.-% reicht, auf der Basis von einem Gesamtgewicht der Baumaterialzusammensetzung, vorhanden ist.

10. Kit zum dreidimensionalen Drucken (3D-Drucken), das umfasst:
eine Baumaterialzusammensetzung, die einschließt:
ein Polyamidmaterial; und
ein Antioxidationsmittel, bestehend aus den Folgenden:
einem aromatischen Multihydrazid; oder
einem aromatischen Sulfonomonohydrazid; oder
einem Hydrazid, das Folgendes aufweist:
eine Formel (I): 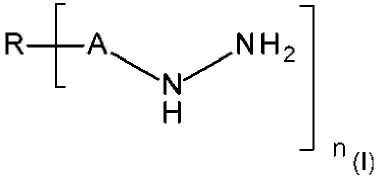 wobei:
R null, ein unverzweigtes C1- bis C12-Alkyl, ein verzweigtes C3- bis C8-Alkyl, ein unverzweigtes C2- bis C8-Alkylen, ein verzweigtes C4- bis C8-Alkylen, eine alicyclische Verbindung, ein Polyethylenglycol oder eine Kombination davon ist;
A C=O, O=S=O, P=O oder C=S ist; und
n eine ganze Zahl, die von 1 bis 4 reicht, ist; oder
eine Formel (II): 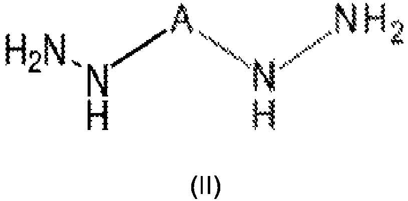
wobei A C=O, O=S=O, P=O oder C=S ist; und
ein Schmelzmittel, das während des 3D-Druckens auf mindestens einen Teil der Baumaterialzusammensetzung aufgebracht wird, wobei das Schmelzmittel einen Energieabsorber zum Absorbieren von Energie zum Zerschmelzen oder Schmelzen der Baumaterialzusammensetzung in dem mindestens dem Teil einschließt.

11. Kit nach Anspruch 10, wobei das Antioxidationsmittel das Hydrazid, das die Formel (I) aufweist, ist und das Antioxidationsmittel in der Baumaterialzusammensetzung in einer Menge, die von etwa 0,05 Gew.-% bis 2 Gew.-% reicht, auf der Basis von einem Gesamtgewicht der Baumaterialzusammensetzung, vorhanden ist.

12. Kit nach Anspruch 10, wobei das Antioxidationsmittel das Hydrazid, das die Formel (II) aufweist, ist und das Antioxidationsmittel in der Baumaterialzusammensetzung in einer Menge, die von 0,1 Gew.-% bis 1 Gew.-% reicht, auf der Basis von einem Gesamtgewicht der Baumaterialzusammensetzung, vorhanden ist.

13. Kit nach Anspruch 10, wobei das Antioxidationsmittel Folgendes ist:
das Hydrazid, das die Formel (I) aufweist, und wobei A C=O ist und n 2 ist; oder
das Hydrazid, das die Formel (II) aufweist, und wobei A C=O ist.

14. Verfahren zum dreidimensionalen Drucken (3D-Drucken), das Folgendes umfasst:
Aufbringen einer Baumaterialzusammensetzung zum Ausbilden einer Baumaterialschicht, wobei die Baumaterialzusammensetzung Folgendes einschließt:
ein Polyamidmaterial; und
ein Antioxidationsmittel, bestehend aus den Folgenden:
einem aromatischen Multihydrazid; oder
einem aromatischen Sulfonomonohydrazid; oder
einem Hydrazid, das Folgendes aufweist:
eine Formel (I): 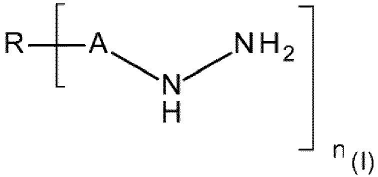 wobei:
R null, ein unverzweigtes C1- bis C12-Alkyl, ein verzweigtes C3- bis C8-Alkyl, ein unverzweigtes C2- bis C8-Alkylen, ein verzweigtes C4- bis C8-Alkylen, eine alicyclische Verbindung, ein Polyethylenglycol oder eine Kombination davon ist;
A C=O, O=S=O, P=O oder C=S ist; und
n eine ganze Zahl, die von 1 bis 4 reicht, ist; oder
eine Formel (II): 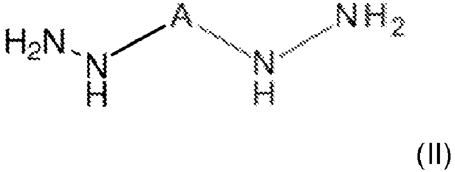
wobei A C=O, O=S=O, P=O oder C=S ist;
auf der Basis von einem 3D-Objektmodell, selektives Aufbringen eines Schmelzmittels auf mindestens einen Teil der Baumaterialschicht; und
Aussetzen der Baumaterialschicht gegenüber Strahlung zum Koaleszieren des mindestens des Teils zum Ausbilden einer Schicht eines 3D-Objekts.

15. Verfahren nach Anspruch 14, wobei das Antioxidationsmittel Folgendes ist:
das Hydrazid, das die Formel (I) aufweist, und wobei A C=O ist und n 2 ist; oder
das Hydrazid, das die Formel (II) aufweist, und wobei A C=O ist.

## Revendications

1. Composition de matériau de construction pour impression tridimensionnelle (3D), comprenant :
un matériau de polyamide ; et
un antioxydant constitué :
d'une multihydrazide aromatique ; ou
d'une sulfonomonohydrazide aromatique ; ou
d'une hydrazide ayant :
une formule (I) : 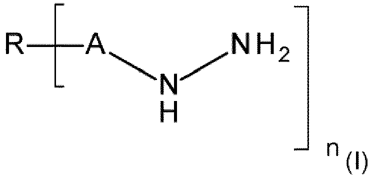 dans laquelle :
R est nul, un alkyle non ramifié en C1 à C12, un alkyle ramifié en C3 à C8, un alkylène non ramifié en C2 à C8, un alkylène ramifié en C4 à C8, un composé alicyclique, un polyéthylène glycol, ou une combinaison de ceux-ci ;
A est C=O, O=S=O, P=O, ou C=S ; et
n est un nombre entier allant de 1 à 4 ; ou
une formule (II) : 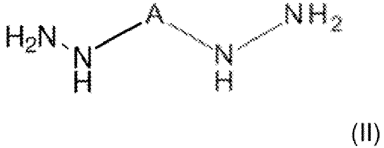 dans laquelle A est C=O, O=S=O, P=O, ou C=S.

2. Composition de matériau de construction selon la revendication 1, dans laquelle l'antioxydant est l'hydrazide de formule (I).

3. Composition de matériau de construction selon la revendication 2, dans laquelle A est O=S=O ou P=O.

4. Composition de matériau de construction selon la revendication 2, dans laquelle l'hydrazide est choisie dans le groupe constitué d'acide adipique dihydrazide, dihydrazide d'oxalyle, dihydrazide succinique, dihydrazide azélaïque, dihydrazide sébacique, dihydrazide dodécanedioïque, et une combinaison de ceux-ci.

5. Composition de matériau de construction selon la revendication 2, dans laquelle A est C=O et n vaut 2.

6. Composition de matériau de construction selon la revendication 1, dans laquelle l'antioxydant est l'hydrazide de formule (II).

7. Composition de matériau de construction selon la revendication 6, dans laquelle A est O=S=O ou P=O.

8. Composition de matériau de construction selon la revendication 6, dans laquelle l'hydrazide est du carbohydrazide.

9. Composition de matériau de construction selon la revendication 1, dans laquelle l'antioxydant est présent dans la composition de matériau de construction en une quantité allant de 0,05 % en poids à 2 % en poids sur la base d'un poids total de la composition de matériau de construction.

10. Kit d'impression tridimensionnelle (3D), comprenant :
une composition de matériau de construction comportant :
un matériau de polyamide ; et
un antioxydant constitué :
d'une multihydrazide aromatique ; ou
d'une sulfonomonohydrazide aromatique ; ou
d'une hydrazide ayant :
une formule (I) : 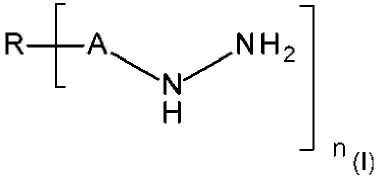 dans laquelle :
R est nul, un alkyle non ramifié en C1 à C12, un alkyle ramifié en C3 à C8, un alkylène non ramifié en C2 à C8, un alkylène ramifié en C4 à C8, un composé alicyclique, un polyéthylène glycol, ou une combinaison de ceux-ci ;
A est C=O, O=S=O, P=O, ou C=S ; et
n est un nombre entier allant de 1 à 4 ; ou
une formule (II) : 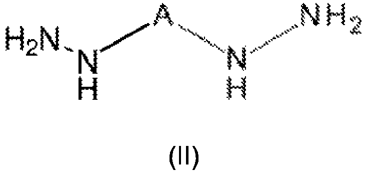
dans laquelle A est C=O, O=S=O, P=O, ou C=S ; et
un agent de fusion à appliquer à au moins une partie de la composition de matériau de construction pendant l'impression 3D, l'agent de fusion comportant un absorbeur d'énergie pour absorber de l'énergie pour fondre ou fusionner la composition de matériau de construction dans l'au moins la partie.

11. Kit selon la revendication 10, dans laquelle l'antioxydant est l'hydrazide de formule (I), et l'antioxydant est présent dans la composition de matériau de construction en une quantité allant d'environ 0,05 % en poids à 2 % en poids sur la base d'un poids total de la composition de matériau de construction.

12. Kit selon la revendication 10, dans laquelle l'antioxydant est l'hydrazide ayant la formule (II), et l'antioxydant est présent dans la composition de matériau de construction en une quantité allant de 0,1 % en poids à 1 % en poids, sur la base d'un poids total de la composition de matériau de construction.

13. Kit selon la revendication 10, dans lequel l'antioxydant est :
l'hydrazide ayant la formule (I), et dans laquelle A est C=O et n vaut 2 ; ou
l'hydrazide ayant la formule (II), et dans laquelle A est C=O.

14. Procédé d'impression tridimensionnelle (3D), comprenant :
l'application d'une composition de matériau de construction pour former une couche de matériau de construction, la composition de matériau de construction comportant :
un matériau de polyamide ; et
un antioxydant constitué :
d'une multihydrazide aromatique ; ou
d'une sulfonomonohydrazide aromatique ; ou
d'une hydrazide ayant :
une formule (I) : 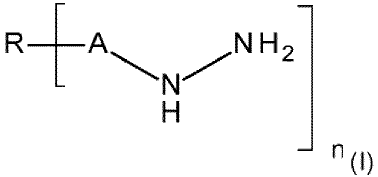 dans laquelle :
R est nul, un alkyle non ramifié en C1 à C12, un alkyle ramifié en C3 à C8, un alkylène non ramifié en C2 à C8, un alkylène ramifié en C4 à C8, un composé alicyclique, un polyéthylène glycol, ou une combinaison de ceux-ci ;
A est C=O, O=S=O, P=O, ou C=S ; et
n est un nombre entier allant de 1 à 4 ; ou
une formule (II) : 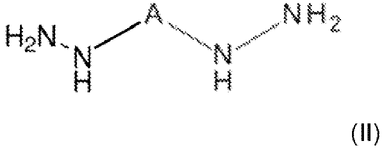
dans laquelle A est C=O, O=S=O, P=O, ou C=S ;
sur la base d'un modèle d'objet 3D, l'application sélective d'un agent de fusion sur au moins une partie de la couche de matériau de construction ; et
l'exposition de la couche de matériau de construction à un rayonnement pour coalescer l'au moins la partie pour former une couche d'un objet 3D.

15. Procédé selon la revendication 14, dans lequel l'antioxydant est :
l'hydrazide ayant la formule (I), et dans laquelle A est C=O et n vaut 2 ; ou
l'hydrazide ayant la formule (II), et dans laquelle A est C=O.
